# EUROPEAN PATENT APPLICATION

(11) **EP 1 775 676 A1**
(43) Date of publication of application: **18.04.2007**
(21) Application number: 05743745.1
(22) Date of filing: 26.05.2005

(54) **BUYER TERMINAL, PURCHASE SURROGATING METHOD, CONSIGNMENT PURCHASE SYSTEM, AND CONSIGNMENT PURCHASE METHOD**

(30) Priority: 09.07.2004 JP 2004202937
(71) Applicant: Suda, Shokei, Taito-ku Tokyo 1110032 (JP); Tanaka, Sadato, Setagaya-ku Tokyo 1540012 (JP); Ando, Hideo, Tokyo 206-0025 (JP)
(72) Inventor: SUDA, Shokei, Tokyo 1110032 (JP); TANAKA, Sadato, Tokyo 1540012 (JP); FUJII, Makoto, Kanagawa 2480024 (JP); ANDO, Hideo, Tokyo 2060025 (JP)
(74) Representative: Seiffert, Klaus
(86) International application number: PCT/JP2005/009698
(87) International publication number: WO 2006/006310

(57) **Abstract**

[PROBLEMS]

To provide a buyer terminal for electronic market enabling a member to access a hosting service and consign commodity purchase to anther member without any risk in a short time.

[MEANS FOR SOLVING PROBLEMS]

A consignment purchase system comprises image computerizing means for computerizing the image of a commodity that a buyer can purchase by imaging the commodity, condition computerizing means for computerizing registration information on the contract condition by inputting the contract condition for commodity purchase contract into a registration form, commodity registering means for transmitting the computerized registration information and image information together with buyer information on buyers through electric communication line and registering them into a commodity database of the service, and consignment accepting means for receiving an electronic mail related to the buyer information registered by the commodity registering means and allowing the buyer to accept purchase consigned by a specific member on the assumption that the service guarantees this commodity purchase consignment by this electronic mail.

## Description

### Field of the Invention

The present invention relates to a buyer terminal, a buying representative method, a consignment buying system and a consignment buying method, and also relates to a terminal, a system and a method applicable for camera-equipped cell phones and portable data terminals.

### Background Art

Conventionally, various types of systems, which allow members registered with a hosting service to access a predetermined site through the Internet and to act as sellers and buyers of a private auction, have been suggested. In such systems, there is known a system that allows members to operate personal computers or the like and upload images and the like together with a bidding condition regarding the listed items in auction to the administration server of the site. Many of the members are individuals who combine fun and profit, and they perform these operations with fun when they have extra time. A member who wants to join bidding to an interested listed item wants to make favorable bidding while evaluating a successful bid price and considering it well by himself/herself.

### Disclosure of the Invention

### Problems to be Solved by the Invention

However, there existed the following problems in the above-described prior art.
(1) Since a member being auctioneer wants as many members as possible to vote for him/her to raise a bid price as high has possible, he/she sets the deadline of bidding relatively longer to some extent to let it have a margin. Therefore, the system did not meet needs for closing bidding in a very short time or immediately. For example, even if he/she finds a sophisticated special sale commodity or the like in a town away from home by chance, it was extremely difficult practically to access an auction site on the spot. It did not induce the casual sense of game, much less motivate voters to feel the sense of money game unexpectedly.
(2) Since such a bargain was not necessarily a well-recognized brand item or an auctioneer did not actually use it, it is impossible to give detail commodity explanation such as how to use and a manufactured condition needlessly. Therefore, a member who wants to consign buying thinks that he/she needs to see an actual commodity with his/her own eyes and check it before the payment of charge, so that it is essential to provide him/her with the image of the commodity. In addition, since the commodity was found in town by chance and despite that uploading of the image immediately at that time is extremely important as a procedure, consideration to match a virtual world with a real world was missing.
(3) Listed items are generally possessions of the members themselves in many cases, it is hard for auctioneer to immediately suffer economical risk even if a successful bid price stopped at a low price or the bid was not successful, and a person who joined bidding does not necessarily make a bid predicting a higher price than its retail price. However, many of the members who became buyers after buying was consigned are individuals, they wanted to contract the buying while avoiding such auction risk particularly and adding a desired commission to cost, it was necessary to surely guarantee the settlement of a predetermined charge. As described, in a hosting service by an auction system, it was impossible to provide a rational electronic market that eliminates risk of both members who consign buying and members who contract buying.

The present invention has been created from the viewpoint of the above-described circumstances, and it is an object of the invention to provide a buyer terminal for an electronic market, a buying representative method, a consignment buying system, a consignment buying method, a program and a recording medium, which enables a member to access a hosting service through an electric communication line and consign commodity buying with another member without any risk in a short time.

### Means for Solving the Problems

To solve the above-described problems, the buyer terminal according to Claim 1 of the present invention is a buyer terminal that is used for a consignment buying system where a registrant, who is registered with a hosting service as a buyer, performs the buying of a commodity done by a member registered with the hosting service that is provided by a server computer on an electric communication line on behalf of the member, and carried by the registrant, in which the terminal is characterized in that it has:
image capture means for photographing a commodity that a registrant, who is registered as a buyer, can buy;
image digitalizing means for digitalizing the image information regarding the buyable commodity whose image was captured by the image capture means, based on a setting format;
input means for inputting a contract condition for commodity buying contract;
condition digitalizing means for digitalizing the contract information regarding the contract condition, which was inputted from the input means, based on a setting format;
commodity registration means for sending buying commodity information containing at least image information that was digitalized in the image digitalizing means, contract information that was digitalized in the condition digitalizing means, and buyer information regarding the registrant who was registered as the buyer to a server computer, which provides the hosting service, through the electric communication line, and for registering the information with a commodity database of the server computer; and
mail receiving means for receiving a buying-guaranteed electronic mail that an operator of the hosting service guarantees the buying consignment of the commodity, which is sent from the server computer, based on the acceptance of buying contract from each member executed in the hosting service based on the registration of the buying commodity information of the commodity database.

According to this characteristic, the buyer can register a buying contract condition containing the image and the like of the commodity with the service through the electric communication line from the spot, and can accept buying consignment from the member. Further, the buying consignment of the member is guaranteed, and charge is paid when he/she sends the commodity to the member. Therefore, it is possible to provide a buyer terminal for electronic market enabling a member to consign commodity buying to another member without any risk in a short time by accessing the hosting service through the electric communication line. In short, each member can be a buyer who contracts buying or a customer who consigns buying according to the need of each member. In the case of becoming the buyer, a bank account number, to which charge of a commodity whose buying was contracted is transferred from the service, or the like is necessary in addition to a general member information for securing mutual security in the communication with the hosting service. Then, attribute information as the buyer such as a bank account number is registered with a member database of the service in advance together with the member registration, and it is set in the commodity registration means and the consignment buying means of this terminal. When the buyer who was registered in this manner finds a bargain outside his/her home, he/she immediately photographs its image by the image digitalizing means to compose the image information of the setting format. Further, he/she can access the listing page of the service to open the registration form of the commodity for the buyer by the condition digitalizing means. When the buyer makes key inputs or the like a predetermined item to the registration form, registered information of the setting format is composed, the image information and registered information are sent out to the electric communication line by the commodity registration means, and notified to the consignment buying means as a case waiting for consignment. At this point, the buyer information is added to the image information or the like, so that a predetermined communication protocol including buyer authentication, commodity listing registration, uploading of image information or the like, notification of buying consignment and charge transfer is carried out in the service. In other words, when a buying consignment occurs in the service, the consignment accepting means, by receiving an electronic mail from the service to the buyer, a member is identified for any one of the cases waiting for consignment and buying consignment is guaranteed and it is accepted as a contracted case of the buyer in a predetermined procedure. Such buyer information is member information regarding the member, and attribute information regarding the attribute of buyer. As the member information, there are a mail address, an identification code, a delivery destination of commodity, credit information and the like. Further, as the attribute information, there is an identification code of a buyer terminal, publicized personal data (including face picture), transfer destination information and return destination information. As the contract information, a search keyword of commodity, publicized commodity information, a stock quantity in a buying source, a contract deadline, a contracted unit price, and the deposit of charge, classification of payment on delivery of commodity and after payment, and the like.

The buyer terminal according to Claim 2 of the present invention is the buyer terminal according to Claim 1, which is characterized in that the image capture means has a camera for photographing a buyable commodity.

According to this characteristic, not only an effect same as the invention according to Claim 1 can be obtained, but also the image information of commodity is integrated into buying commodity information or the like in a predetermined format and it is easily taken into the commodity database, so that the buyer can quickly register the image of commodity.

The buyer terminal according to Claim 3 of the present invention is the buyer terminal according to Claim 1 or 2, which is characterized in that the contract condition inputted from the input means includes a buyable contract deadline until when buying can be performed.

According to this characteristic, not only an effect same as the invention according to Claim 1 or Claim 2 can be obtained, but also the contract deadline is integrated into registered information in a predetermined format and it is easily registered with the commodity database. By the contract deadline, if the acceptance of the buying consignment is stopped and it is possible to judge unsuccessful charge settlement by each member, economical risk of the buyer can be eliminated. In the commodity database, economical risk of the buyer and the service can be eliminated if at least a part of deposit of the commodity charge by each member can be confirmed within the contract deadline, the buyer can complete the buying contract in a short time without disturbing his/her lifestyle, and economical risk can be eliminated depending on a status.

The buyer terminal according to Claim 4 of the present invention is the buyer terminal according to any one of Claims 1 to 3, which is characterized in that the commodity registration means sends the buying commodity information to the server computer through the electric communication line including a mobile communication line.

According to this characteristic, not only an effect same as the invention according to any one of Claim 1 to Claim 3 can be obtained, but also the buyer can use mobile communication, so that he/she can execute the buying contract easily from outside his/her home or the like. In short, it is possible to send the image information or the like from a portable terminal, and it can be sent via an electric communication line having a different communication protocol. A server computer provided with the commodity database can be installed on the mobile communication line or on another electric communication line. Further, the buyer can contract buying on the spot even outside his/her home while acting without changing his/her lifestyle.

The buyer terminal according to Claim 5 of the present invention is the buyer terminal according to any one of Claims 1 to 4, which is characterized in that the buying-guaranteed electronic mail includes that commodity charge was deposited to the hosting service according to a buying condition.

According to this characteristic, the fact that the charge was deposited is notified by an electronic mail, deposit contents can be collated with the buying condition, for example, and it can be a guarantee to avoid the economical risk of the buyer. In short, not only an effect same as the invention according to any one of Claim 1 to Claim 4 can be obtained, but also the economical risk of the buyer can be avoided by the deposit of charge and the guarantee.

The buying representative method in the buyer terminal according to Claim 6 of the present invention is a buying representative method in the buyer terminal, which is used by a registrant, who was registered with the hosting service as a buyer, performs the buying of a commodity done by a member registered with the hosting service that is provided by the server computer on the electric communication line on behalf of the member, in which the method is characterized in that it includes:
an image digitalizing step of digitalizing the image information regarding a buyable commodity by photographing the commodity by the buyer, based on a setting format;
a contract condition accepting step for accepting a contract condition for commodity buying contract;
a condition digitalizing step for digitalizing the contract information regarding the contract condition, which was accepted on the contract condition accepting step, based on a setting format;
a commodity registration step of sending buying commodity information containing at least image information that was digitalized in the image digitalizing step, contract information that was digitalized in the condition digitalizing step, and buyer information regarding the registrant who was registered as the buyer to the server computer, which provides the hosting service, through the electric communication line, and for registering with the commodity database of the server computer; and
a mail receiving step for receiving a buying-guaranteed electronic mail that the operator of the hosting service guarantees the buying consignment of the commodity, which is sent from the server computer, based on the acceptance of buying contract from each member executed in the hosting service based on the registration of the buying commodity information of the commodity database.

According to this characteristic, the buyer can register a buying contract condition containing the image and the like of the commodity with the service through the electric communication line from the spot, and can accept buying consignment from the member. Further, the buying consignment of the member is guaranteed, and charge is paid when the commodity is sent to the member. Therefore, by accessing the hosting service through the electric communication line, a preferable buying representative method in the buyer terminal for the consignment buying system, which enables a member to consign commodity buying to another member without any risk in a short time can be provided. In short, each member can be a buyer who contracts buying or a customer who consigns buying according to the need of each member. In the case of becoming the buyer, a bank account number, to which charge of a commodity whose buying was contracted is transferred from the service, or the like is necessary in addition to a general member information for securing mutual security in the communication with the hosting service. Then, attribute information as the buyer such as a bank account number is registered with a member database of the service in advance together with the member registration, and it is set in the commodity registration step and the like of this terminal. When the buyer who was registered in this manner finds a bargain outside his/her home, he/she immediately photographs its image on the image digitalizing step to compose the image information of the setting format. Further, in the condition digitalizing step, he/she can access the listing page of the service to open the registration form of the commodity for the buyer. When the buyer key-inputs or the like a predetermined item to the registration form, contract information of the setting format is composed, the image information and contract information are sent out to the electric communication line on the commodity registration step, and notified to the consignment buying step as a case waiting for consignment. At this point, the buyer information is added to the image information or the like, so that a predetermined communication protocol including buyer authentication, commodity listing registration, uploading of image information or the like, notification of buying consignment and charge transfer is carried out in the service. In other words, when a buying consignment occurs in the service, by receiving an electronic mail from the service to the buyer, a member is identified for any one of the cases waiting for consignment and buying consignment is guaranteed, and it is accepted as a contracted case of the buyer on a predetermined procedure in the consignment accepting step. Such buyer information is member information regarding the member, and attribute information regarding the attribute of buyer. As the member information, there are a mail address, a member ID, a delivery destination, credit information and the like. Further, as the attribute information, there is an identification code of a buyer terminal, publicized personal data (including face picture), transfer destination information and return destination information. As the contract information, a search keyword of commodity , publicized commodity information, a stock quantity in a buying source, a contract deadline, a contracted unit price, and classification of advance payment, payment on delivery and after payment, and the like.

The buying representative method in the buyer terminal according to Claim 7 of the present invention is the buying representative method in the buyer terminal according to Claim 6, which is characterized in that
the image digitalizing step digitalizes image information captured by a camera for photographing the buyable commodity.

According to this characteristic, not only an effect same as the invention according to Claim 6 can be obtained, but also the image information of commodity is integrated into the buying commodity information or the like in a predetermined format and it is easily taken into the commodity database, so that the buyer can quickly register the image of the commodity.

The buying representative method in the buyer terminal according to Claim 8 of the present invention is the buying representative method in the buyer terminal according to Claim 6 or Claim 7, which is characterized in that
the contract condition accepted on the accepting step includes the contract deadline until when buying can be performed.

According to this characteristic, not only an effect same as the invention according to Claim 6 or Claim 7 can be obtained, but also the contract deadline is integrated into registered information in a predetermined format and it is easily registered with the commodity database. By the contract deadline, if the accepting of the buying consignment is stopped and it is possible to judge unsuccessful charge settlement by each member, economical risk of the buyer can be eliminated. In the commodity database, economical risk of the buyer and the service can be eliminated if at least a part of deposit of commodity charge by each member can be confirmed within the contract deadline, the buyer can complete the buying contract in a short time without disturbing his/her lifestyle, and economical risk can be eliminated depending on a status.

The buying representative method in the buyer terminal according to Claim 9 of the present invention is the buying representative method in the buyer terminal according to any one of Claims 6 to Claim 8, which is characterized in that
the commodity registration step sends the buying commodity information to the server computer through the electric communication line including the mobile communication line.

According to this characteristic, not only an effect same as the invention according to any one of Claim 6 to Claim 8 can be obtained, but also the buyer can use mobile communication, so that he/she can execute the buying contract easily from outside his/her home or the like. In short, it is possible to send the image information or the like from the portable terminal, and it can be sent via an electric communication line having a different communication protocol. The server computer provided with the commodity database can be installed on the mobile communication line or on another electric communication line. Further, the buyer can contract buying on the spot even outside his/her home while acting without changing his/her lifestyle.

The buying representative method in buyer terminal according to Claim 10 of the present invention is the buying representative method according to any one of Claim 6 to Claim 9, which is characterized in that
the buying-guaranteed electronic mail received on the mail-receiving step includes that commodity charge was deposited to the hosting service according to a buying condition.

According to this characteristic, the fact that the charge was deposited is notified by the electronic mail, deposit contents can be collated with the buying condition, for example, and it can be a guarantee to avoid the economical risk of the buyer. In short, not only an effect same as the invention according to any one of Claim 6 to Claim 9 can be obtained, but also the economical risk of the buyer can be avoided by the deposit of charge and the guarantee.

The consignment buying system in the buyer terminal according to Claim 11 of the present invention is a consignment buying system where a registrant, who registered with the hosting service as a buyer, performs the buying of a commodity done by a member registered with the hosting service that is provided by the server computer on the electric communication line on behalf of the member, in which the system is characterized in that it has:
a buyer terminal that is provided with a communication function to the server computer, having:
   image capture means for photographing a commodity that the registrant, who is registered as a buyer, can buy;
   image digitalizing means for digitalizing the image information regarding the buyable commodity whose image was captured by the image capture means, based on a setting format;
   input means for inputting a contract condition for commodity buying contract;
   condition digitalizing means for digitalizing the contract information regarding the contract condition, which was inputted from the input means, based on a setting format;
   commodity registration means for sending buying commodity information containing at least image information that was digitalized in the image digitalizing means, contract information that was digitalized in the condition digitalizing means, and buyer information regarding the registrant who was registered as the buyer to the server computer, which provides the hosting service, through the electric communication line, and for registering the information with the commodity database of the server computer; and
   mail receiving means for receiving the buying-guaranteed electronic mail that the operator of the hosting service guarantees the buying consignment of the commodity, which is sent from the server computer, based on the acceptance of buying contract from each member executed in the hosting service based on the registration of the buying commodity information of the commodity database; and
   a server computer that provides the hosting service, in which
   the server computer has:
      a commodity database for registering the buying commodity information;
      buying contract accepting means for distributing commodity information containing at least the image information and contract information of a commodity, which are contained in each buying commodity information registered with the commodity database, to the terminal of each member who applied member registration to the hosting service through the electric communication line, and for accepting buying contract of each commodity;
      charge depositing means for performing a processing of depositing at least a part of the charge of commodity, for which the buying contract accepting means accepted buying contract, to a member who executed the buying contract;
      buying guarantee electronic mail sending means for sending an electronic mail that the operator of the hosting service guarantees the buying consignment of the commodity, to a registrant who is identified by the buyer information contained in the buying commodity information of the commodity, which is registered with the commodity database, based on deposit-done confirmation of commodity charge in the charge depositing means;
      reception-confirmed electronic mail receiving means for receiving a reception-confirmed electronic mail that the reception of the commodity, for which the buying contract was accepted, was confirmed from the member who executed the buying contract; and
      deposit money balancing means for executing a processing of transferring deposit money, which was deposited by the member by the charge depositing means, to the bank account of the registrant who became the buyer of the commodity that was delivered to the member, based on the reception of the reception-confirmed electronic mail by the reception-confirmed electronic mail receiving means.

According to this characteristic, it is possible to allow the buyer to register a buying contract condition containing the image and the like of the commodity with the service through the electric communication line from the spot, and to accept buying consignment from the member. Further, it is possible to allow the member to deposit the commodity charge and to notify him/her of reception confirmation. Moreover, it is also possible to guarantee the buying consignment of the member to the buyer and to pay charge or deposit money being a part of the charge after the reception confirmation of the commodity. Therefore, by accessing the hosting service through the electric communication line, a consignment buying system for electronic market enabling a member to consign commodity buying to another member without any risk in a short time can be provided. In short, each member can be a buyer who contracts buying or a customer who consigns buying according to the need of each member. In the case of becoming the buyer, a bank account number, to which charge of a commodity whose buying was contracted is transferred from the service, or the like is necessary in addition to a general member information for securing mutual security in the communication with the hosting service. Then, attribute information as the buyer such as a bank account number is registered in advance together with the member registration, and it is set in the member database of the service, for example. When the buyer who was registered in this manner finds a bargain outside his/her home and accesses listing page in the service, a registration form of commodity for the buyer is sent to the buyer terminal and opened. In the registration form, registered information based on predetermined items key-inputted or the like is composed on the setting format and sent out to the electric communication line. Thus, a predetermined communication protocol including buyer authentication, commodity listing registration, uploading of image information or the like, notification of buying consignment and charge deposit is carried out in the service. When the registered information (buying commodity information) of the commodity is stored (registered) on the commodity database, the registered information becomes searchable and browsable from each member terminal by the charge depositing means, and the service seeks buying consignment of the member. For example, when the member selects a particular commodity to instruct buying consignment, a deposit processing of charge is executed based on the registered information of the commodity. Deposit contents proceeded in the deposit processing is associated with the member. When the deposit contents of member is confirmed by the charge transfer means as required, the service guarantees the buyer the acceptance of buying consignment, and pays the charge of the commodity to the buyer when the reception of the commodity is confirmed from the member. In other words, deposit-done is reported to the buyer if the deposit contents fulfills the contract condition of the buyer, and the charge of deposit-done is transferred to the buyer if the reception confirmation of the commodity by the member is as in the buying consignment. As the general member information, there are a mail address, a member ID, a delivery destination, credit information and the like, and as the attribute information of buyer, there are the identification code of the buyer terminal, publicized personal data (including face picture), transfer destination information and return destination information. The registered information is the contract information regarding the buying contract, the image information of commodity, the buyer information of buyer terminal and the like. As the contract information, there are the search keyword of commodity, publicized commodity information, the stock quantity in a buying source, a contract deadline, contracted unit price, and the classification of advance payment, payment on delivery and after payment, and the like, and furthermore, as the buyer information, there are member information and the like (mail address, member ID, for example) associated with the attribute information. As the buyer terminal, there is a camera-equipped portable terminal (cell phone, PDA (Portable Data Assistance, for example) that the buyer is allowed to take along (carry) and is capable of photographing a commodity.

The consignment buying system according to Claim 12 of the present invention is the consignment buying system according to Claim 11, which is characterized in that the charge depositing means includes:
credit inquiry processing means for performing a processing of inquiring a financial institution whether or not the member who executed the buying contract owns the credit of a deposit amount being at least a part of the charge of the commodity for which the buying contract was accepted;
deposit propriety judging means for judging the propriety of deposit based on credit-confirmed information that is replied from the financial institution based on the credit inquiry in the credit inquiry processing means; and
use reservation sending process means for sending use reservation for requesting the preservation of the deposit amount, which was inquired by the credit inquiry processing means, to the financial institution based on the fact that the judgment result of deposit propriety in the deposit propriety judging means is depositable.

According to this characteristic, not only an effect same as the invention according to Claim 11 can be obtained, but also, by inquiring the financial institution of credit to judge propriety of deposit by the credit, settlement inability of a deposit amount can be avoided, and furthermore, by sending the use reservation to the financial institution, preservation of the deposit amount from the credit is executed, and settlement inability of the deposit amount caused by the use of the credit after executing the deposit is avoided as well.

The consignment buying system according to Claim 13 of the present invention is the consignment buying system according to Claim 11, which is characterized in that
the charge depositing means includes:
settlement request sending processing means for performing a processing of sending a settlement request of the charge of the commodity, whose buying contract was accepted, to the financial institution; and
deposit propriety judging means for judging the propriety of deposit based on the settlement information containing the information of settlement propriety that is replied from the financial institution based on the reception of a settlement request in the settlement request sending processing means, and
the deposit money balancing means includes cancel processing means that executes a processing of returning the charge of the commodity being the deposit money, which was deposited by the member in the charge depositing means, to the bank account of the member who performed the buying contract, based on the fact that reception-confirmed electronic mail receiving means did not receive the reception-confirmed electronic mail within a predetermined period.

According to this characteristic, not only an effect same as the invention according to Claim 11 can be obtained, but also the charge of commodity can be collected early to the bank account of an operator operating the hosting service because the settlement of the charge of commodity is executed in deposit. Therefore, not only a period difference with the charge payment to the resistrant being the buyer who executed buying can be reduced or totally eliminated and the burden can be lightened, but also loss caused by settlement inability of the charge of commodity, which becomes the deposit money, can be remarkably reduced and processing load of a processing regarding the deposit, which includes communication with the financial institution, can be reduced.

The consignment buying system according to Claim 14 of the present invention is the consignment buying system according to Claim 12 or 13, which is characterized in that it has:
notifying means for notifying the member who performed buying contract that deposit cannot be made when the deposit propriety judging means judges that the deposit cannot be made.

According to this characteristic, not only an effect same as the invention according to Claim 12 or Claim 13 can be obtained, but also the member who performed the buying contract can recognize that deposit could not be made, and thus it is possible to prevent the occurrence of a trouble caused by the fact that the deposit could not be made and the buying of commodity was not done.

The consignment buying system according to Claim 15 of the present invention is the consignment buying system according to Claim 11, which is characterized in that
the charge depositing means performs a processing of transferring at least a part of the charge of the commodity, for which buying contract was accepted, to the bank account under the name of hosting service.

According to this characteristic, not only an effect same as the invention according to Claim 11 can be obtained, but also the convenience of the member in the settlement of a small amount can be provided while the economical risk of the buyer is eliminated.

The consignment buying system according to Claim 16 of the present invention is the consignment buying system according to any one of Claim 11 to Claim 15, which is characterized in that
the server computer has:
purchasing consignment wished commodity accepting means for accepting information regarding a commodity that each member, who applied member registration to the hosting service, wishes to make purchasing consignment from his/her terminal;
purchasing consignment wished commodity database for storing the information regarding a commodity that the member wishes to make purchasing consignment, which the purchasing consignment wished commodity accepting means accepted; and
application accepting means for distributing information regarding a commodity that the member wishes to make purchasing consignment, which is stored in the purchasing consignment wished commodity database, to a buyer terminal that the registrant, who was registered as a buyer, carries and accepting the application for the purchasing consignment of the commodity, and
the buying contract accepting means, based on the application in the application accepting means, sends information regarding a commodity to be bought, which is sent from the buyer terminal of the registrant who made application, to the member who wishes to make purchasing consignment to the applied commodity, and accepts the buying contract of the commodity to be bought.

According to this characteristic, not only an effect same as the invention according to any one of Claim 11 to Claim 15 can be obtained, but also the member can request a commodity to which he/she wishes to perform buying, the registrant (member) being the buyer searches/browses the commodity to which he/she wishes to perform buying and can confirm whether or not there is a person having buying wish for the commodity to be bought, the information of the commodity to be bought is sent to the person having buying wish, so that the buying can be executed quickly and efficiently to improve the convenience of the member.

The consignment buying system according to Claim 17 of the present invention is the consignment buying system according to any one of Claim 11 to Claim 16, which is characterized in that
the commodity registration means sends the buying commodity information to the server computer through the electric communication line including the mobile communication line.

According to this characteristic, not only an effect same as the invention according to any one of Claim 11 to Claim 16 can be obtained, but also information including the image of the commodity can be registered quickly from outside his/her home or the like because the buyer is allowed to use mobile communication. Further, buyer can contract buying even outside his/her home while acting without changing his/her lifestyle.

The consignment buying system according to Claim 18 of the present invention is the consignment buying system according to any one of Claim 11 to Claim 17, which is characterized in that
the charge depositing means enables the registrant who is registered as the buyer to perform deposit within a contract deadline that is set for each commodity.

According to this characteristic, not only an effect same as the invention according to any one of Claim 11 to Claim 17 can be obtained, but also the buying contract can be completed in a short time while the economical risk is eliminated for the buyer. In short, the contract deadline is registered with the commodity database, for example. By the contract deadline, if the acceptance of buying consignment is stopped and unsuccessful charging settlement by each member can be judged, the economical risk of the buyer can be eliminated. In the commodity database, if the deposit of charge by each member can be confirmed within the contract deadline, the economical risk of buyer and the service can be eliminated.

The consignment buying system according to Claim 19 of the present invention is the consignment buying system according to any one of Claim 11 to Claim 18, which is characterized in that
the server computer includes ranking means for ranking the registrant, who was registered as the buyer, regarding buying consignment performance, and
the charge depositing means executes a processing of presenting the ranking information of the buyer, which was ranked in the ranking means, for the member.

According to this characteristic, not only an effect same as the invention according to any one of Claim 11 to Claim 18 can be obtained, but also the member can easily select a buyer and the buying contract of the buyer can be recommended. Further, by statistically processing and disclosing the number of buying consignment or a deposit amount from the member by each buyer, it can be used as determining information when the member selects a buyer, and the buyer can disclose performance to the member. Such ranking information is a total consignment number or a total transfer amount, which is accumulated and within a predetermined period, or share in the total performance of all buyers in either one.

The consignment buying method according to Claim 20 of the present invention is a buying representative method, which is used by the registrant, who registered with the hosting service as a buyer, performs the buying of a commodity done by a member registered with the hosting service that is provided by the server computer on the electric communication line on behalf of the member, in which the method is characterized in that it includes:
a commodity registration step of receiving buying commodity information including at least image information that the image of buyable commodity by the registrant is digitalized based on the setting format, contract information that a contract condition for the buying contract of commodity is digitalized based on the setting format, and buyer information regarding the registrant registered as the buyer, from the buyer terminal that each registrant, who was registered as the buyer, carries through the electric communication line, and registrating the information to the commodity database;
a buying contract accepting step of distributing commodity information containing at least the image information and the contract information of the commodity, which are contained in the buying commodity information that is registered with the commodity database on the commodity registration step, to the terminal of the member, who applied member registration to the hosting service, via the electric communication line and accepting the buying contract of each commodity;
a charge depositing step of performing a processing of depositing at least a part of the charge of the commodity, for which the buying contract was accepted on the buying contract accepting step, to the member who executed the buying contract;
a buying-guaranteed electronic mail sending step of sending an electronic mail that the operator of the hosting service guarantees the buying consignment of commodity to a registrant identified by the buyer information contained in the buying commodity information, which is registered with the commodity database, based on a deposit-done confirmation of commodity charge on the charge depositing step;
a reception-confirmed electronic mail receiving step of receiving a reception-confirmed electronic mail that the reception of the commodity whose buying contract was accepted from the member who executed the buying contract; and
a deposit money balancing step of executing a processing of transferring deposit money, which was deposited by the member on the charge depositing step, to the bank account of the registrant who became the buyer of the commodity delivered to the member based on the fact that the reception-confirmed electronic mail was received on the reception-confirmed electronic mail receiving step.

According to this characteristic, it is possible to allow the buyer to register a buying contract condition including the image or the like of a commodity with the service from the spot through electric communication line, and to accept the buying consignment from the member. Further, it is possible to allow the member to deposit the charge of the commodity, and the reception confirmation can be notified. Moreover, the buying consignment of the member is guaranteed to the buyer, and charge or deposit money being a part of the charge can be paid after the reception confirmation of the commodity. Therefore, it is possible to provide a consignment buying system for electronic market enabling a member to consign commodity buying to another member without any risk in a short time by accessing the hosting service through the electric communication line. In short, each member can be a buyer who contracts buying or a customer who consigns buying according to the need of each member. In the case of becoming the buyer, a bank account number, to which charge of a commodity whose buying was contracted is transferred from the service, or the like is necessary in addition to a general member information for securing mutual security in the communication with the hosting service. Then, attribute information as the buyer such as a bank account number is registered in advance together with the member registration, and it is set in the member database of the service, for example. When the buyer who was registered in this manner finds a bargain outside his/her home and accesses listing page in the service, a registration form of commodity for the buyer is sent to the buyer terminal and opened. In the registration form, registered information based on predetermined items that were key-inputted or the like is composed on the setting format and sent out to the electric communication line. Thus, a predetermined communication protocol including buyer authentication, commodity listing registration, uploading of image information or the like, notification of buying consignment and charge deposit is carried out in the service. When the registered information (buying commodity information) of the commodity is stored (registered) on the commodity database, the registered information becomes searchable and browsable from each member terminal by the charge depositing means, and the service seeks buying consignment of the member. For example, when the member selects a particular commodity to instruct buying consignment, a deposit processing of charge is executed based on the registered information of the commodity. Deposit contents proceeded in the deposit processing is associated with the member. When the deposit contents of member is confirmed by the charge transfer means as required, the service guarantees the buyer the acceptance of buying consignment, and pays the charge of the commodity to the buyer when the reception of the commodity is confirmed from the member. In other words, deposit-done is reported to the buyer if the deposit contents fulfills the contract condition of the buyer, and the charge of deposit-done is transferred to the buyer if the reception confirmation of the commodity by the member is as in the buying consignment. As the general member information, there are a mail address, a member ID, a delivery destination, credit information and the like, and as the attribute information of buyer, there are the identification code of the buyer terminal, publicized personal data (including face picture), transfer destination information and return destination information. The registered information is the contract information regarding the buying contract, the image information of commodity, the buyer information of buyer terminal and the like. As the contract information, there are the search keyword of commodity, publicized commodity information, the stock quantity in a buying source, a contract deadline, contracted unit price, and the classification of advance payment, payment on delivery and after payment, and the like, and furthermore, as the buyer information, there are member information and the like (mail address, member ID, for example) associated with the attribute information. As the buyer terminal, there is a camera-equipped portable terminal (cell phone, PDA (Portable Data Assistance, for example) that the buyer is allowed to take along (carry) and is capable of photographing a commodity.

The consignment buying method according to Claim 21 of the present invention is the consignment buying method according to Claim 20, which is characterized in that
the charge depositing step includes:
a credit inquiry processing step of performing a processing of inquiring the financial institution whether or not the member who executed the buying contract owns the credit of the deposit amount being at least a part of the charge of the commodity for which the buying contract was accepted;
a deposit propriety judging step of judging propriety of deposit based on the credit-confirmed information that is replied from the financial institution based on the credit inquiry in the credit inquiry processing step; and
a use reservation sending process step of sending use reservation for requesting the preservation of the deposit amount, which was inquired on the credit inquiry processing step based on the fact that the judgment result of deposit propriety on the deposit propriety judging step is depositable, to the financial institution.

According to this characteristic, not only an effect same as the invention according to Claim 20 can be obtained, but also settlement inability of the deposit amount can be avoided by inquiring the financial institution of credit to jude propriety of deposit by the credit, and preservation of the deposit amount from the credit is executed by sending the use reservation to the financial institution, and then settlement inability of the deposit amount caused by the use of the credit after executing the deposit is avoided as well.

The consignment buying method according to Claim 22 of the present invention is the consignment buying method according to Claim 20, which is characterized in that
the charge depositing step includes:
a settlement request sending processing step of performing a processing of sending a settlement request of the charge of the commodity, for which the buying contract was accepted, to the financial institution; and
a deposit propriety judging step of judging propriety of deposit based on the settlement information that includes the information of the propriety of settlement replied from the financial institution based on the reception of the settlement request in the settlement request sending process step, and
the deposit money balancing step includes a cancel processing step of executing a processing of returning the charge of the commodity, which is the deposit money deposited by the member in the charge depositing step, to the bank account of the member who performed the buying contract, based on the fact that reception-confirmed electronic mail was not received within a predetermined period on the reception-confirmed electronic mail receiving step.

According to this characteristic, not only an effect same as the invention according to Claim 20 can be obtained, but also the charge of commodity can be collected early to the bank account of the operator operating the hosting service because the settlement of the charge of commodity is executed in deposit. Therefore, not only a period difference with the charge payment to the resistrant being the buyer who executed buying can be reduced or totally eliminated and the burden can be lightened, but also loss caused by settlement inability of the charge of commodity, which becomes the deposit money, can be remarkably reduced and processing load of a processing regarding the deposit, which includes communication with the financial institution, can be reduced.

The consignment buying method according to Claim 23 of the present invention is the consignment buying method according to Claim 21 or 22, which is characterized in that it includes:
a notifying step of notifying the member who performed the buying contract of the fact that deposit could not be made when the deposit propriety judging step judged that the deposit could not be done.

According to this characteristic, not only an effect same as the invention according to Claim 21 or Claim 22 can be obtained, but also the member who performed the buying contract can recognize that the deposit could not be made, and thus it is possible to prevent the occurrence of a trouble caused by the fact that the deposit could not be made and the buying of commodity was not done.

The consignment buying method according to Claim 24 of the present invention is the consignment buying method according to Claim 20, which is characterized in that
the charge depositing step performs a processing of transferring at least a part of the charge of the commodity, for which the buying contract was accepted, to the bank account under the name of the hosting service.

According to this characteristic, not only an effect same as the invention according to Claim 20 can be obtained, but also the convenience of the member in the settlement of a small amount can be provided while the economical risk of the buyer is eliminated.

The consignment buying method according to Claim 25 of the present invention is the consignment buying method according to any of Claim 20 to Claim 24, which is characterized in that it includes:
a purchasing consignment wished commodity accepting step of accepting information regarding the commodity for which each member, who applied member registration to the hosting service, wishes to make purchasing consignment from him/her;
a purchasing consignment wished commodity information storing step of storing the information regarding the commodity, for which the member wishes to make purchasing consignment that the purchasing consignment wished commodity accepting step accepted, in a purchasing consignment wish commodity database; and
an application accepting step of distributing information regarding the commodity stored in the purchasing consignment wished commodity database in the purchasing consignment wished commodity information storing step, for which he/she wishes to make purchasing consignment, to the buyer terminal that the registrant registered as the buyer carries and accepting an application to the purchasing consignment of the commodity, and
the buying contract accepting step sends the information regarding a commodity to be bought, which is sent from the buyer terminal of the applied registrant, to the member who wishes to make the purchasing consignment of the applied commodity, and accepts the buying contract of the commodity to be bought, based on the application on the application accepting step.

According to this characteristic, not only an effect same as the invention according to any one of Claim 20 to Claim 24 can be obtained, but also the member can request a commodity for which he/she wishes buying, and the registrant (member) being the buyer can search/browse the commodity for which he/she wishes buying to confirm whether or not there is a person having buying wish to a commodity to be bought, and the information of the commodity to be bought is sent to the person having buying wish, so that the buying can be executed quickly and efficiently to improve the convenience of the member.

The consignment buying method according to Claim 26 of the present invention is the consignment buying method according to any of Claim 20 to Claim 25, which is characterized in that
the commodity registration step receives the buying commodity information from the buyer terminal through the electric communication line including the mobile communication line.

According to this characteristic, not only an effect same as the invention according to any one of Claim 20 to Claim 25 can be obtained, but also the buyer is allowed to use mobile communication, so that information including the image of commodity can be registered quickly from outside his/her home or the like. Further, the buyer can contract buying on the spot even outside his/her home while acting without changing his/her lifestyle.

The consignment buying method according to Claim 27 of the present invention is the consignment buying method according to any of Claim 20 to Claim 26, which is characterized in that
the charge depositing step enables the registrant who was registered as the buyer to perform deposit within a contract deadline that is set for each commodity.

According to this characteristic, not only an effect same as the invention according to any one of Claim 20 to Claim 26 can be obtained, but also it is possible to complete the buying contract for the buyer in a short time while the economical risk is eliminated. In short, the contract deadline is registered with the commodity database, for example. By the contract deadline, if the accepting of the buying consignment is stopped and it is possible to judge unsuccessful charge settlement by each member, economical risk of the buyer can be eliminated. In the commodity database, economical risk of the buyer and the service can be eliminated if the deposit of charge by each member can be confirmed within the contract deadline.

The consignment buying method according to Claim 28 of the present invention is the consignment buying method according to any of Claim 20 to Claim 27, which is characterized in that it includes:
a ranking step of ranking the registrant registered as the buyer regarding the buying consignment performance, and
the charge depositing step executes a processing of presenting the ranking information of the buyer, who was ranked on the ranking step, for the member.

According to this characteristic, not only an effect same as the invention according to any one of Claim 20 to Claim 27 can be obtained, but also the member can easily select a buyer, and the buying contract of buyer can be recommended. Further, by statistically processing and disclosing the number of buying consignment or a deposit amount from the member by each buyer, it can be used as determining information when the member selects a buyer, and the buyer can disclose performance to the member. Such ranking information is a total consignment number or a total transfer amount, which is accumulated and within a predetermined period, or share in the total performance of all buyers in either one.

The program according to Claim 29 is a program to allow a computer to execute the method according to any one of Claim 6 to Claim 10 and Claim 20 to Claim 28. According to the program, it is possible to allow the computer to execute the method according to any one of Claim 6 to Claim 10 and Claim 20 to Claim 28.

A recording medium according to Claim 22 is characterized in that the program, which allows the computer to execute the method according to any one of Claim 6 to Claim 10 and Claim 20 to Claim 28, is recorded therein.

According to this characteristic, it is possible to allow the computer to execute the method according to any one of Claim 6 to Claim 10 and Claim 20 to Claim 28.

### BRIEF DESCRIPTION OF THE DRAWINGS

Fig. 1 is a view for explaining the outline constitution example of consignment buying system according to an embodiment of the present invention.
Fig. 2 is a view for explaining a function in each section of a buyer telephone of the system.
Fig. 3 is a block diagram that specifically shows each section of an administration server of the system.
Fig. 4 is a view showing a processing example of the buying representative method according to the embodiment of the present invention, and is a flowchart showing the processing in the software of the buyer telephone.
Fig. 5 is a flowchart showing a processing example of the consignment accepting step of the system.
Fig. 6 is a flowchart showing a processing example of the procedure processing function of the system.
Fig. 7 is a schematic view showing a display example of the registered information or the like of a commodity on the display screen of a purchaser telephone of the system.
Fig. 8 is a flowchart showing a processing example of the charge transfer function of the system.
Fig. 9 is a view for explaining the outline constitution example of another consignment buying system according to the embodiment of the present invention.
Fig. 10 is a view showing commodity information stored in a commodity database.
Fig. 11 is a view showing member information stored in a member database.
Fig. 12 is a view showing consignment information stored in an administration server.
Fig. 13 is a view showing the processing of the consignment buying system of Example 2, to which the present invention is applied.
Fig. 14 is a view showing the processing state between a site operation company and a credit card company in the consignment buying system of Example 2, to which the present invention is applied.
Fig. 15 is a view showing the purchasing consignment request processing of the consignment buying system of Example 2, to which the present invention is applied.
Fig. 16 is a view showing the processing state between the site operation company and the credit card company in the consignment buying system of another mode.

### Explanation of Reference Numerals

10: Buyer telephone (buyer terminal)
19: Commodity
19a: Image information
20: Buyer telephone network (mobile communication line)
30: Internet (electric communication line)
40: Commodity database
50: Member database
60: Administration server
70: Purchaser telephone network (mobile communication line)
80: Purchaser telephone (member terminal)

### Best Mode for Carrying Out the Invention

Hereinafter, description will be made for the embodiments of the present invention by referring to the drawing.

### Example 1

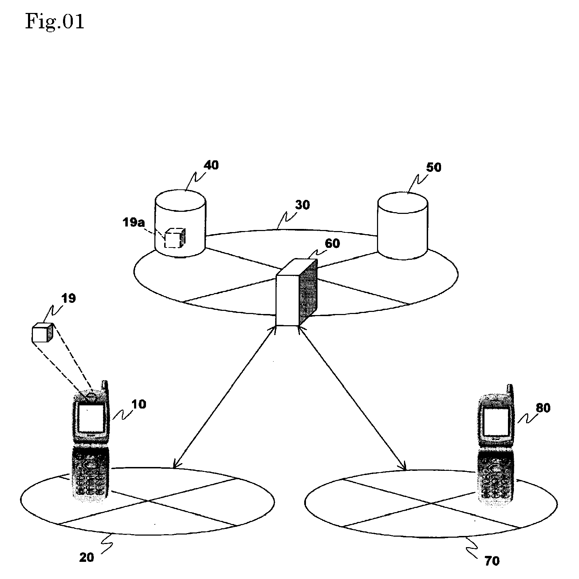

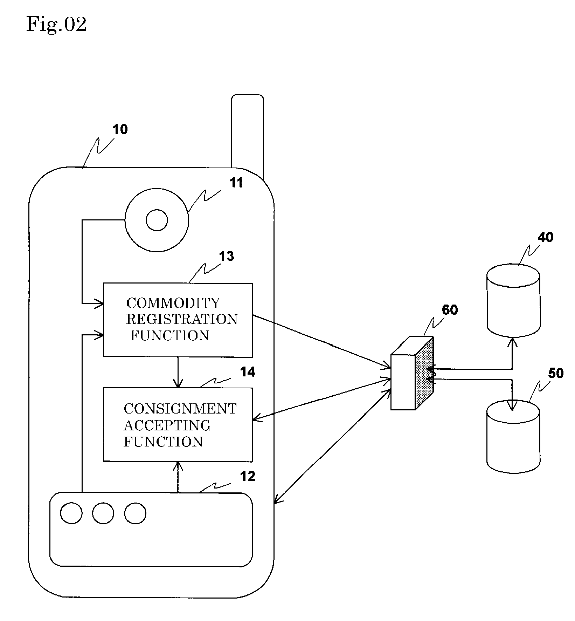

Fig. 1 is the view for explaining the outline constitution example of the consignment buying system according to the embodiment of the present invention. Fig. 2 is the view for explaining the function in each section of the buyer telephone of the invention.

This system is operated in an administration company of hosting service, where a member being a purchaser (hereinafter, referred to as a purchaser) allows a member being the buyer of the commodity 19 (hereinafter, referred to as a buyer) to contract the consignment buying of the commodity 19, and the system has: a camera-equipped cell phone (buyer terminal) (hereinafter, referred to as a buyer telephone) 10 that the buyer takes along when going out or the like; a cell phone network (mobile communication line) (hereinafter, referred to as a buyer telephone network) 20 of the buyer, to which the buyer telephone 10 is connected; the Internet (electric communication line) 30 connected with the telephone network 20; a commodity database (database means) 40 installed on the Internet 30; an administration server 60 of a member database 50 and the service; a cell phone network (purchaser telephone network) 70 connected with the Internet 30; and a cell phone (member terminal) (hereinafter, referred to as a purchaser telephone) 80 connectable with the administration server 60, the commodity database 40 and the member database 50 through the telephone network 70, and it allows the buyer to register the image information 19a regarding the commodity 19 that he/she found outside his/her home with the commodity database 40.

Such an administration company includes an Internet service provider, a telephone company, a financial institution, a credit card company, another membership business operating company and a door-to-door delivery service company and the like. The buyer telephone network 20 and the purchaser telephone network 70 may be the same, and the communication method of each telephone network 20, 70 is not limited. Therefore, a constitution where the administration server 60 or the like is installed on either cell phone network 20, 70 is acceptable, but description will be made below for an example where the server is installed on the Internet 30. Instead of the Internet 30, an electric communication line such as an extranet, an intranet or another etc. of the company may be used. Further, instead of the purchaser telephone 80 on the purchaser telephone network 70, a personal computer (not shown) may be used by providing it on the Internet 30.

The buyer telephone 10 shown in Fig. 2 is a cell phone equipped with a CCD (Charge Coupled Device) camera, and any portable terminal in which each CCD camera is detachable or other terminals capable of capturing and sending images are acceptable. The buyer telephone 10 has: a camera interface function (image digitalizing means) 11 provided with the CCD camera; an input interface (condition digitalizing means) 12 to allow the buyer to key-input a contract condition for contracting the buying consignment; a commodity registration function (commodity registration means) 13 that sets the digital data of each interface function in the registration form of the commodity 19 through the buyer telephone network by exchanging mails with the administration server to register it with the commodity database; and a consignment accepting function (consignment accepting means) 14 that accepts the buying consignment of the purchaser by exchanging mails in the same manner.

The commodity registration function 13 has: the setting memory of the buyer information and the contract condition; an electronic mail sending function of the registered information to administration server 60; and a mail attaching function of the image information 19a of JPEG format, for example. The consignment accepting function 14 has: a setting memory (may be commonly used with the setting memory of commodity registration function) of the buyer information and the contract condition; a mail receiving function of the buying consignment from the administration server 60; a mail reading function of the buying consignment; a collating function of the contract condition; a confirming function of a transfer procedure or the like. In a simple way, the commodity registration function 13 and the consignment accepting function 14 should be connected in PPP (Point to Point Protocol) with the administration server 60.

The registered information includes the search keyword regarding the commodity 19, the publicized commodity information for the purchaser to browse, the number of buyable items, the contract deadline, the contracted unit price, the deposit of charge, and the settlement classification of payment on delivery of commodity and after payment, and the like to enable the purchaser to buy a desired commodity 19. Further, to allow a delivery institution to deliver the commodity 19, the shop information of a buying source or the like is included. The search keyword includes category attribute (general goods, sneakers, etc.) that the purchaser can easily recognize, for example, the publicized commodity information includes the image information 19a of the commodity 19, and a detailed explanation such as the brand name, size and color of the commodity 19 is included according to the needs. The number of buyable items is 7 pieces when the stock quantity of the buying source is 7 pieces or when cash on hand of the buyer is for 7 pieces, for example.

The contract deadline is within 3 hours when the buyer waits for only 3 hours from now on in the buying source, for example. Therefore, although the purchaser cannot proceed for the buying consignment beyond the contract deadline, the buyer is allowed to refer to it as a buyer's optional case, to compare and consider cost for visiting the buying source, total contract amount, contribution of the contract performance or the like, and he/she may be allowed to determine approval exceptionally. The contracted unit price includes administration fee of the administration company. The settlement classification is basically the deposit within the contract deadline. However, to accommodate the purchaser in the case of a short deadline and an expensive commodity, there is payment on delivery of commodity where the door-to-door delivery service company collects charge representatively and after payment for bank transfer. The delivery institution is the door-to-door delivery service company, for example, and the shop information is a shop name, address, and a telephone number.

The commodity database 40 has: a mail reading function of registered information from the buyer telephone 10; an accumulating function of a predetermined format for associating with the buyer information; a search function of a contract condition, the image information 19a or the like, which uses the search keyword of the commodity 19 as a key; and a function to pass the registered information to the administration server 60. The member database 50 has; an accumulating function of member information for associating personal data of the member and attribute information as the buyer with the identification code of the member; and a registration-updating function of the member information by the buyer telephone 10 and the purchaser telephone 80 through the administration server 60.

The member information includes the mail addresses of the purchaser and the buyer, the member ID (identification code), a delivery destination for receiving the commodity 19, credit information for settlement procedure, and the like.

The attribute information includes the telephone number of the buyer telephone 10, the publicized personal data (handle, including face picture according to needs), buyer's bank account information (settlement institution name, bank account type, bank account number, bank account name) for transferring the charge of the commodity 19, and return destination information, and also includes current address to allow the buyer to guarantee each information, or the like. As the member ID, the telephone number of each cell phone, which is conveniently used, is used for example. The credit information includes purchaser's bank account information that is used in transferring refund to the purchaser when the buying consignment is cancelled.

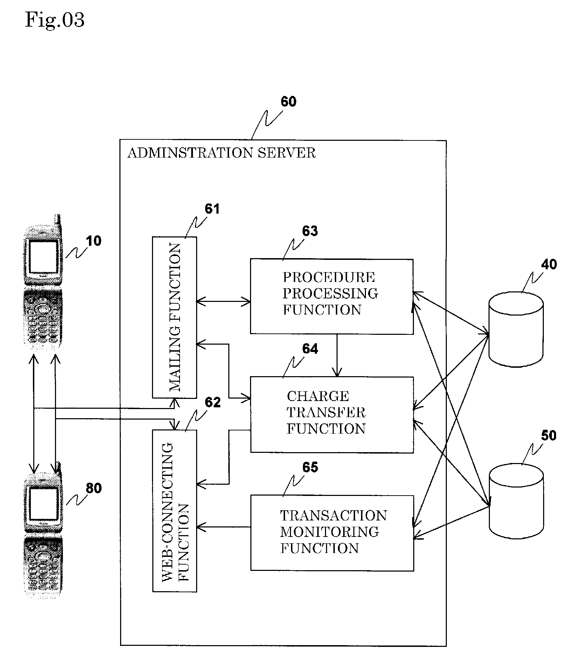

Fig. 3 is the block diagram that specifically shows each section of the administration server shown in Fig. 1. The administration server 60 is connectable with the buyer telephone 10 through the buyer telephone network 20 and with the purchaser telephone 80 through the purchaser telephone network 70 by a predetermined communication method, and it has: a mailing function 61 capable of exchanging mails with the buyer telephone 10 or the like; a Web-connecting function 62 that controls access from the buyer telephone 10 or the like in the electronic market site of the service; a procedure processing function (charge depositing means) 63 to allow the buyer to register the commodity 19 and to allow each member to proceed the buying consignment of the commodity 19 in the site; a charge transfer function (charge transfer means) 64 that transfers the deposit charge of the member to the buyer after confirming the commodity reception by the member; and a transaction monitoring function 65 that monitors a transaction stage between the three parties of the buyer, the administration company and the member and with the settlement institution.

The Web-connecting function 62 is provided with the setting memory of the member information of buyers and purchasers; a protocol-exchanging function of a predetermined mailing and filing system; and a communication function with the buyer telephone or the like 10, 80, each database 40, 50, and procedure processing and charge transfer functions 63, 64. In a simple way, exchanging processing between PPP connection and FTP (File Transfer Protocol) connection should be done. Instead of separately providing such a Web-connecting function 62, a constitution, where the function is built in the commodity database 40, the procedure processing function 50, the charge transfer function 60 and the publicizing function 65 to allow each function 40 to 65 to directly communicate with the buyer telephone 10 or the like, is acceptable, and in such a case, the commodity registration function 13 or the like of the buyer telephone 10 is connected with the built-in administration function of the commodity database 40 by the Web-connecting function 62 of the commodity database 40, the registered information should be read from the registration form.

The procedure processing function 63 has: a consignment procedure page of the service; a setting memory of the registration form and the consignment of commodity database 40 form; a depositing function of an administration bank account; an electronic mail (hereinafter, referred to as a consignment mail) sending function of deposit contents; and a storing function that associates the deposit contents with the member information to make it a reception-waiting state. The charge transfer function 64 has: an event timer by a predetermined activating condition; a setting memory of the member information of buyer and purchaser, and the deposit contents; an examination function of deposit contents based on the bank account information of administration bank account or the like; a composing function of an electronic mail (hereinafter, referred to as an instruction mail) that the buying was consigned; a reading function of an electronic mail (hereinafter, referred to as a reception confirmation mail) that the reception of the commodity 19 was confirmed; a collecting function of administration fee (3%, for example); a composing function of an electronic mail (hereinafter, referred to as a completion mail) of the transfer processing of a contract amount to the buyer and that a charge was transferred; and a cancelling function of a reception-waiting state.

The transaction monitoring function 65 has: a status confirming function that tracks each transaction stage by monitoring the mailing function 61; a penalty function that imposes a penalty to the cancelled buying contract of the buyer; and a ranking function that ranks the contract performance of each buyer. The status confirming function publicizes each stage of the commodity registration, the consignment procedure, the settlement procedure, the transfer processing, the consignment and the reception of a reception confirmation mail, and the sending of an instruction and completion mail to the buyer telephone 10 or the like. Further, the penalty function, handles penalty when refund to the purchaser frequently occurs by the cancelling of the buying contract by the buyer. For example, it is a case where a large number of orders are accepted despite of a commodity that is very popular and expected to be sold out instantaneously and a commodity with few stocks evidently. Accordingly, it is possible to urge the buyer to carefully observe the stock quantity and the sales of commodity at store counter and to be responsible for a remained quantity after the contract deadline.

The ranking function is a function to present the ranking information regarding the contract performance of the buyer by reading all instruction mails to all buyers to aggregate deposit contents and by taking statistics of a predetermined period. By notifying material incentive such as the discount of administration fee and the supply of cash or points to the charge transfer function 64 according to an order on ranking, the function is allowed to give it to the buyer. Further, quality incentive such as priority display and citation is notified to the procedure processing function 63 and the function is allowed to give it to him/her in the same manner. With these processings, the purchaser can easily estimate the sophisticated selection of commodity and the credibility of the buyer, and competition among buyers is promoted to result in active dealing. The ranking information is a total consignment number or a total transfer amount, which is accumulated and within a predetermined period, or share in the total performance of all buyers in either one.

Links to a credit card, a net bank, electronic money, collection representative service and other settlement procedures are provided for the consignment procedure page, and the deposit contents include the identification code of the commodity 19, a deposit amount, the settlement institution name that proceeds each settlement procedure, processing person's name (including an identification code or the like according to needs) and its settlement date. For example, the member number, the member name and the expiry date of a credit card are inputted from the purchaser telephone 80 at a linked destination of credit card payment. If necessary, a credit card company name is inputted, and a bank account for payment or the like is registered in advance. The ranking of the contract performance may be displayed in combination on such a consignment procedure page. The bank account information of an administration company includes bank account balance, the settlement notification or the user's notification of a settlement institution, for example, and the procedure of paying to the buyer includes a sending processing of an electronic mail for reporting transfer contents to the buyer.

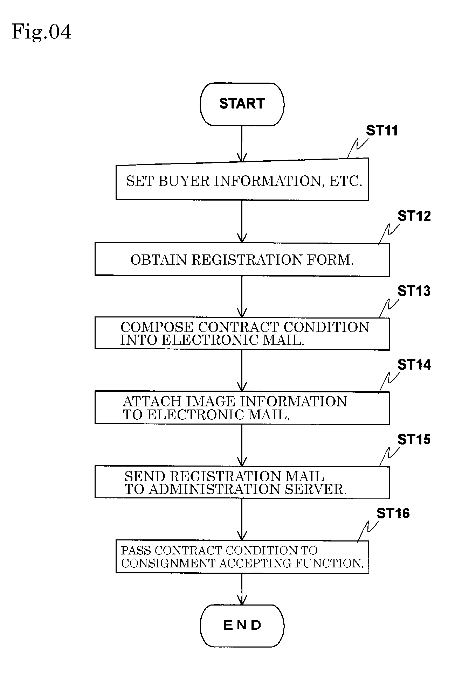

Next, description will be made for an example of the buying representative method according to the embodiment of the present invention. First, the process example of software in the buyer telephone will be explained by referring to an example of flowchart shown in Fig. 4 and each drawing shown in Figs. 1 to 3.

As a preliminary preparation, buyer information by which the member becomes the buyer is registered with the member database 50 in advance as attribute information. The attribute information is associated with the member information of the member and stored in the member database 50. Further, a registration form by which the buyer register a commodity is created on a predetermined format and set in the procedure processing function 63 of the administration server 60 (step ST11).

When the buyer finds a buyable commodity, photographs it by the CCD camera, and activates the commodity registration function 13, access is performed to the administration server 60 and the registration form is received (step ST12). With this, on the condition digitalizing step, the contract condition of the buyer is key-inputted from the input interface 12 to the registration form, and composed into an electronic mail of a predetermined format (step ST13). Further, on the image digitalizing step, the photographed image of the commodity is attached to the electronic mail as image information from the camera interface 11 (step ST14). Then, on the commodity registration step, the electronic mail is sent to the administration server 60 as a registration mail (step ST15), and the contract condition is passed to the consignment accepting function 14 and stored (step ST16).

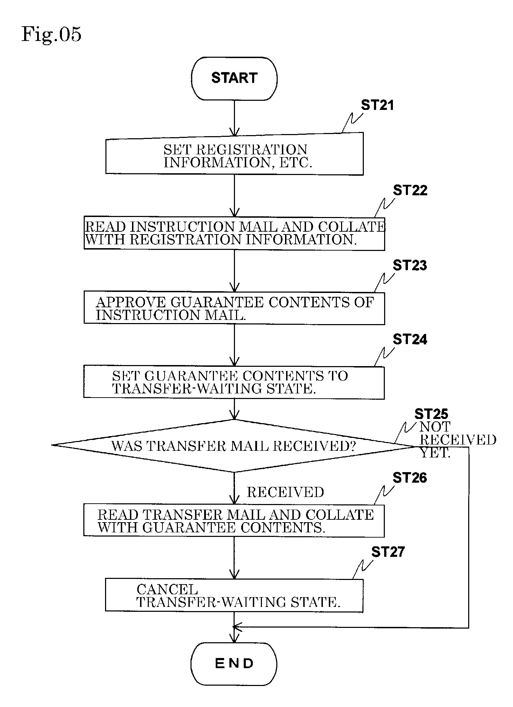

On the consignment accepting step shown in Fig.5, when the buyer telephone 10 receives an instruction mail to the buyer , the consignment accepting function 14 is activated and appropriate registered information or the like is set (step ST21). The guarantee contents of the administration company is read by the instruction mail, and it is collated with the registered information (step ST22). When the guarantee contents are approved by the key operation or the like of the buyer (step ST23), the guarantee contents are stored and transfer-waiting state is set (step ST24). When a transfer mail is received by the administration server 60 (step ST25), the transfer mail is read and it is collated with the guarantee contents (step ST26). Accordingly, the transfer-waiting state is cancelled (step ST27).

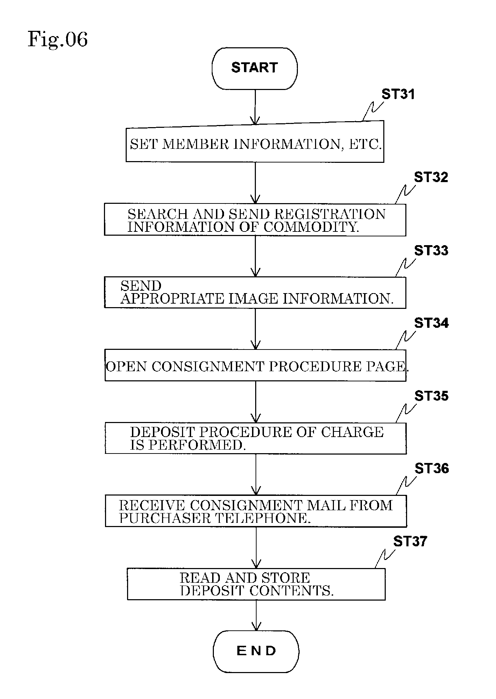

Subsequently, description will be made for the software of the administration server by referring to an example of the flowchart shown in Fig. 6 and each drawing shown in Figs. 1 to 4. First, an example of the procedure processing function will be described. As a preliminary preparation, the member registers predetermined member information with the member database 50 in advance. Further, a consignment form by which the member proceeds a buying consignment is created on a predetermined format and set in the procedure processing function 63 of the administration server 60. Further, regarding the member who accessed the procedure processing function 63, his/her member information or the like is obtained from the member database 50, and thus it is set in the setting memory (step ST31).

When the member sets a search keyword of an arbitrary commodity, a commodity group corresponding to the search keyword is searched by the commodity database 40, the registered information of each commodity is sent to the purchaser telephone 80 (step ST32), and furthermore, image information 19a linked with each registered information is sent (step ST33), and the information is displayed on the purchaser telephone 80. When the member identifies a desired commodity, he/she is allowed to open the consignment procedure page (step ST34), allowed to key-input predetermined items for the buying consignment of commodity on the page, and also allowed to perform the deposit procedure of charge in the linked destination of the settlement procedure (step ST35). Further, the predetermined items and the deposit contents are composed into a consignment mail, and it is sent to the procedure processing function 63 (step ST36). When the consignment mail is received, it is associated with the member information and stored in the setting memory by reading its deposit contents, and passed to the charge transfer function 64 (step ST37).

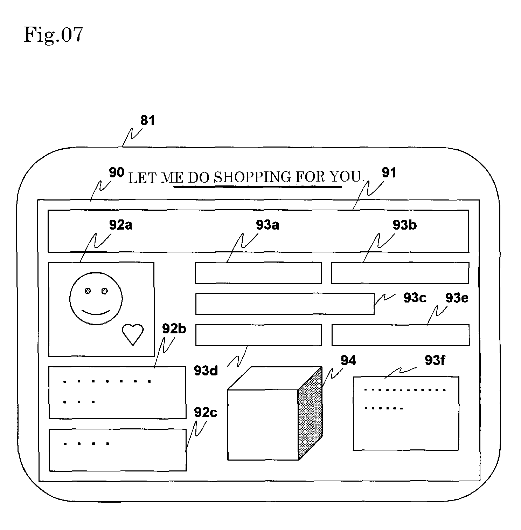

Fig. 7 is the schematic view showing the display example of the registered information of commodity or the like on the display screen of the purchaser telephone. On the display screen 81, together with a caption urging the purchaser to consign buying, a control bar 91 for identifying a commodity, selecting a deposit procedure, a screen operation or the like is arranged on the uppermost step in the display frame 90 for each commodity, the publicized personal data such as the face picture 92a, the contract performance 92b and the ranking 92c of the buyer is displayed on the lower left column thereof, and the publicized commodity information such as the search keyword 93a, the commodity name 93b, the contracted unit price 93c, contract deadline 93d, the number of buyable items 93e and the detailed explanation 93f and the image information 94 of the commodity are displayed on the lower right column thereof.

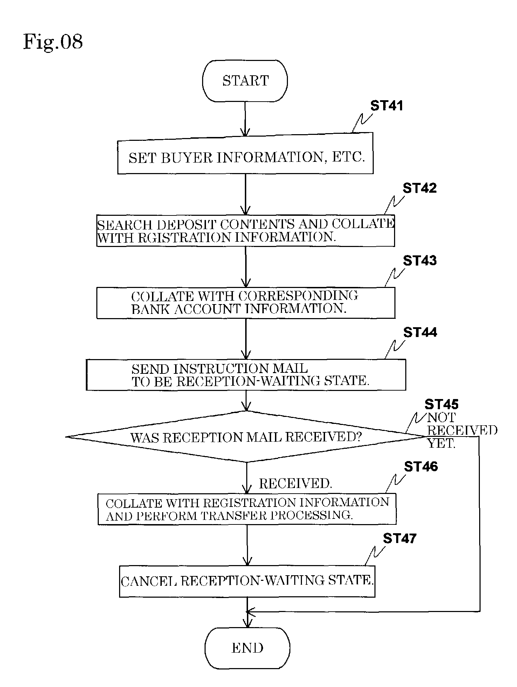

In the same manner, description will be made for the charge transfer function by referring to an example of the flowchart shown in Fig.8 and each drawing shown in Figs. 1 to 6. As a preliminary preparation, predetermined buyer information is set in the member database 50 as the attribute information, and the format of the instruction mail or the like is set in the charge transfer function 64. Further, regarding the buyer for which consignment procedure was taken, its attribute information or the like is obtained from the member database 50 and is set in the setting memory (step ST41).

As described, when the event timer of the charge transfer function 64 fulfills a predetermined conditions, unprocessed deposit contents are searched and collated with corresponding registered information (step ST42), and furthermore, they are also collated with an appropriate bank account (step ST43). Further, an instruction mail based on the collated result is composed and sent to the buyer, and the deposit contents are set to the reception-waiting state and stored in the setting memory (step ST44). Then, when the reception confirmation mail of the commodity is received from the purchaser telephone 80 (step ST45), the reception confirmation mail is read and collated with the registered information, a contract amount for the deposit contents of the member is transferred to the transfer bank account of the buyer (step ST46), and the completion mail of the transfer procedure is sent to the buyer to cancel the reception-waiting state (step ST47). The predetermined conditions of the event timer includes the passage of regular predetermined period, a case where new deposit contents occurred, a case where instruction was made from an accessory terminal (not shown), a case where a single purchaser purchased two types or more of commodities exceeding a predetermined total amount (a total amount should be 10,000 yen when the contracted unit price is about 2,000 yen, for example) (packaging), or the like. The profit rate of buyer tends to go down by the settlement of a small amount or a low-priced commodity, which is typical to an individual purchaser, but such an economical risk can be avoided.

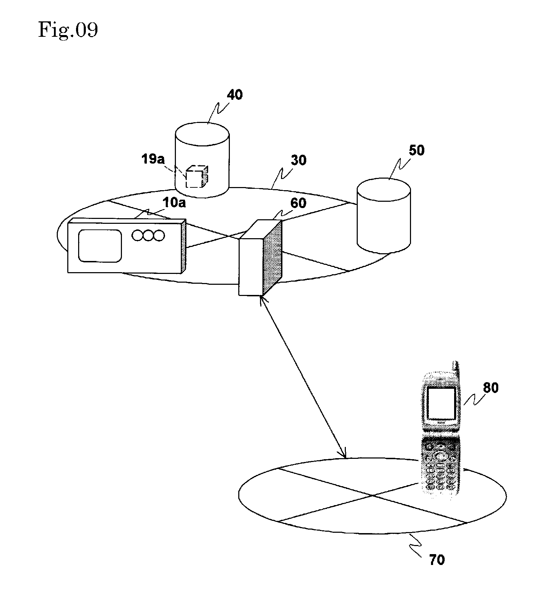

Fig. 9 is the view for explaining an outline constitution example of another consignment buying system according to the embodiment of the present invention. The system uses a camera-equipped PDA (Portable Data Assistance) 10a equipped with a CCD camera and the Internet 30 instead of the buyer telephone 10 and buyer telephone network 20, and it has a constitution connectable with the administration server 60 or the like by TCP/IP connection, for example, through the Internet 30. The camera-equipped PDA has a camera interface, an input interface, a commodity registration function and a consignment accepting function in the same manner as the buyer telephone. However, the two functions directly communicate with the Web-connecting function and the mailing function of the administration server 60 without depending on the exchanging function of the buyer telephone network 20.

### Example 2

Fig. 1 is the view showing the constitution of the consignment buying system of this Example 2 to which the present invention is applied.

The consignment buying system of this example is operated in the administration company of the hosting service, and the member being a person who wishes to purchase (hereinafter, referred to as a purchaser) allows the member being the buyer of the commodity 19 (hereinafter, referred to as a buyer) to contract the consignment buying of the commodity 19. For example, the administration company (site operation company) of the hosting service includes an Internet service provider, telephone company, financial institution, a credit card company, another membership business-operating company, a door-to-door delivery service company, and the like.

The consignment buying system, as shown in Fig. 1, has: the camera-equipped cell phone (buyer terminal) (hereinafter, referred to as a buyer telephone) 10 that the buyer takes along when he/she goes out or the like, the cell phone network (mobile communication line) (hereinafter, referred to as a buyer telephone network) 20 of the buyer, to which the buyer telephone 10 is connected; the Internet (electric communication line) 30 connected with the buyer telephone network 20; the administration server 60 (server computer) of the commodity database 40, the member database 50 and the consignment buying system, which are installed on the Internet 30; the cell phone network (purchaser telephone network) 70 of the purchaser, which is connected to the Internet 30; and the cell phone (member terminal) (hereinafter, referred to as a purchaser telephone) 80 connectable to the administration server 60, the commodity database 40 and the member database 50 via the purchaser telephone network 70, and when the buyer accesses the administration server 60 for the image information 19a regarding a commodity 19 that he/she found outside his/her home from the buyer telephone 10, it can be registered with the commodity database 40 via the administration server 60.

Fig. 2 is the view showing the function of the buyer telephone 10 of this example to which the present invention is applied. The buyer telephone 10 of this example is a regular cell phone that mounts the CCD (Charge Coupled Device) camera thereon and has an Internet function for transmitting and receiving an image photographed by the CCD camera and character information, which is inputted by the input interface such as a dial key. Note that the CCD camera may be detachable, and it may be any type as long as it is a portable terminal provided with image capture means, input means of character information and transmission/reception means of digitalized information.

The buyer telephone 10, as shown in Fig. 2, has: the camera interface (image digitalizing means) 11 provided with the CCD camera (image capture means); the input interface (condition digitalizing means) 12 provided with buttons (input means) to allow the buyer to input the information of the commodity 19 and a contract condition (contract information) of the consignment buying of the commodity 19; the commodity registration function (commodity registration means) 13 that sets commodity information (buying commodity information), which consists of the digitalized contract condition inputted via the camera interface 11 and the input interface 12 and information (buyer information) by which the buyer who inputted the contract condition can be identified, to the registration form of the administration server 60, and registers the commodity information with the commodity database40 in the administration server 60 by exchanging mails with the administrarion server 60 through thy buyer telephone network 20; and the consignment accepting function (mail accepting means) 14 that accepts an "instruction mail" (buying-guaranteed electronic mail) (described later) showing that the consignment buying was requested by the purchaser by exchanging mails in the same manner.

The commodity registration function 13 of the buyer telephone 10 is provided with: the member information of the buyer; a setting memory for storing the commodity information; a sending function of a "commodity registration mail" for registering the commodity information including the contract condition with the administration server 60; and a mail attaching function of the image information 19a of JPEG format, for example.

The consignment accepting function 14 of the buyer telephone 10 has: the setting memory (may be commonly used with the setting memory of the commodity registration function 13) for storing the member information of the buyer, the commodity information or the like; a receiving function of an "instruction mail" showing that the consignment buying from the administration server 60 is instructed and guarantee contents of the charge regarding the consignment buying; a reading function of the "instruction mail"; a collating function of the contract condition of the consignment buying and the guarantee contents of charge, and the like.

The commodity database 40 has: a reading function of a "commodity registration mail" for registering commodity information that is sent from the buyer telephone 10 and accepted via the administration server 60; an accumulating function that stores the read commodity information by associating with the member information of the buyer; a search function that searches commodity information including the contract condition and the image information 19a by using the search keyword of the commodity 19 as a key; and a function that sends and receives the commodity information to/from the administration server 60.

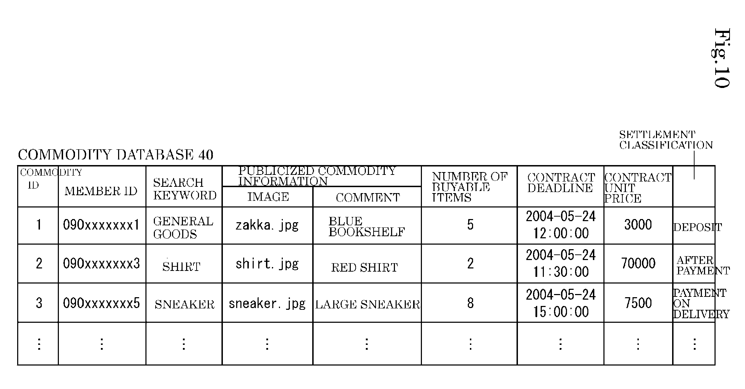

The commodity information stored in the commodity database 40 is inputted in the buyer telephone 10 as described above and registered with the commodity database 40. Describing the commodity information in details, as shown in Fig. 10, regarding the commodity information, the search keyword regarding commodity 19, publicized commodity information to allow the purchaser to browse, the number of buyable items, a contract deadline, contracted unit price, and settlement classification that is set to any one of advance payment (deposit of charge by a credit card, purchasing points, etc.), payment on delivery of commodity, and after payment (bank transfer), and the like are corresponded to a commodity ID in order to enable the purchaser to buy a desired commodity 19. Further, although not shown, the information may include the shop information or the like of a buying source to allow the delivery institution to deliver the commodity 19.

The search keyword of commodity information stored in the commodity database 40(refer to Fig. 10) is category attribute (general goods, sneakers, etc.) that the purchaser can easily recognize, for example. The publicized commodity information (refer to Fig. 10) includes the image information 19a of the commodity 19, and also includes a comment as detailed explanation such as brand, size and color of the commodity 19 according to needs. The buyable quantity (refer to Fig. 10) is 7 pieces when the stock quantity of the buying source is 7 pieces or when cash on hand of the buyer is for 7 pieces, for example. The contract deadline (refer to Fig. 10) is within 3 hours when the buyer waits for only 3 hours from now on in the buying source, for example. The contracted unit price (refer to Fig. 10) includes the administration fee of the administration company. The settlement classification (refer to Fig. 10) is basically the deposit within the contract deadline. However, to accommodate the purchaser in the case of a short contract deadline and an expensive commodity, there is the payment on delivery of commodity where the door-to-door delivery service company collects charge representatively and after payment for bank transfer. The delivery institution is the door-to-door delivery service company. The shop information (not shown) is the shop name, address, and the telephone number.

The member database 50 has: accumulating function that accumulates the member information of the purchaser and the member information of the buyer by associating with the identification code (member ID) of the member; and a registration-updating function that allow the member information to be registered or updated from the buyer telephone 10 or the purchaser telephone 80 via the administration server 60.

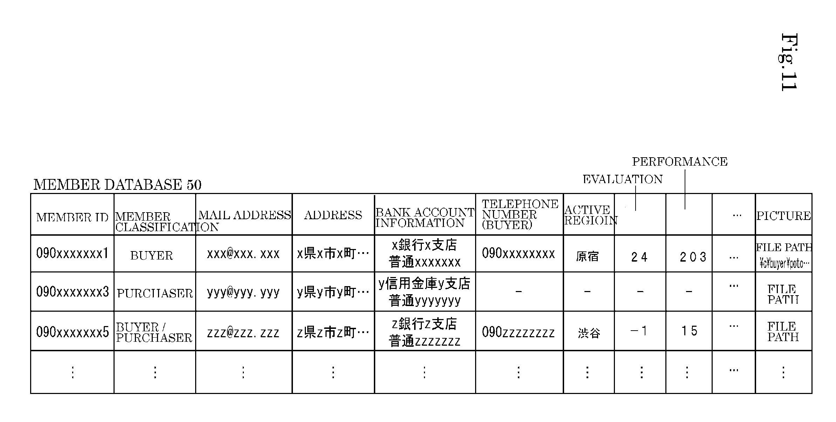

Regarding the member information stored in the member database 50, as shown in Fig. 11, a member classification showing that the member is a purchaser, a buyer, or both of them, the mail address of the member, the address of the member used in receiving or returning the commodity 19, the bank account information of the member, a telephone number used particularly when contacting a buyer member in the case of emergency, and the like are corresponded to the member ID. Note that the member information may include the publicized personal data (handle name, face picture, etc.) (not shown) of the buyer. Further, the member ID may be information by which the member can be identified uniquely, and the telephone number of the buyer telephone 10 or the purchaser telephone 80, which is conveniently used, is used for example.

The bank account information of the member information stored in the member database 50 is used when a "reception confirmation mail" showing that the purchaser received the commodity was delivered from him/her as a result of the consignment buying that was carried out by the buyer and the operator of the consignment buying system that transfers the charge to the buyer, or when refund is transferred to the purchaser in the case where the purchaser or the buyer cancelled the consignment buying.

Fig. 3 is the view showing the function of the administration server 60 of this example to which the present invention is applied. The administration server 60 of this example is a regular server computer capable of data transmission/reception with the buyer telephone 10 via the buyer telephone network 20 or data transmission/reception with the purchaser telephone 80 via the purchaser telephone network 70 by each predetermined communication method.

The administration server 60, as shown in Fig. 3, has: a mailing function 61 capable of exchanging mails with the buyer telephone 10, the purchaser telephone 80 or the like; a Web-connecting function 62 that performs data transmission/reception after being connected from a browser of the buyer telephone 10, the purchaser telephone 80 or the like; a procedure processing function (buying consignment accepting means) 63 that processes processings of accepting the commodity information of commodity 19 from the buyer telephone 10 via the mailing function 61 or the Web-connecting function 62 (refer to Fig. 10) or processings of accepting the request of consignment buying of commodity 19 from the purchaser telephone 80; a charge transfer function (charge depositing means, buying guarantee electronic mail sending means, reception-confirmed electronic mail receiving means, deposit money balancing means) 64 that performs a processing to allow the purchaser to deposit the charge of commodity 19 to the administration company corresponding to the accepted buying consignment contents of the commodity 19, instructs the consignment buying to the buyer based on the deposit-done confirmation of the charge, and allows the purchaser to transfer the charge deposited to the administration company to the bank account of the buyer after confirming the commodity reception of the purchaser; and a transaction monitoring function 65 that monitors the transaction stage between the three parties of the buyer, the administration company and the purchaser and with the settlement institution.

The Web-connecting function 62 of administration server 60 is provided with: a setting memory for storing the member information of the buyer and the purchaser; a function of performing data transmission/reception after being connected with the browser of the buyer telephone 10 or the purchaser telephone 80; and a communication function of sending/receiving the data to be transmitted to/from the commodity database 40, the member database 50, the procedure processing function 63 and the charge transfer function 64.

Note that a constitution, where a function equivalent to the Web-connecting function 62 is provided for each of the commodity database 40, the member database 50, the procedure processing function 63, the charge transfer function 64, and the functions performs communication directly with the buyer telephone 10 or the purchaser telephone 80, is acceptable.

The procedure processing function 63 of the administration server 60 has: a registration form with which the buyer registers the commodity information (refer to Fig. 10); a consignment procedure form for inputting consignment information that consists of an intention of the purchaser that he/she requests the consignment buying of the commodity 19 and deposit contents showing the information regarding the deposit of charge; a setting memory for storing the consignment information or the like accepted via the consignment procedure form; a receiving function of a "consignment mail" including the consignment information inputted in the consignment procedure form; and a storing function that stores the consignment information accepted in the "consignment mail" by associating with the member information.

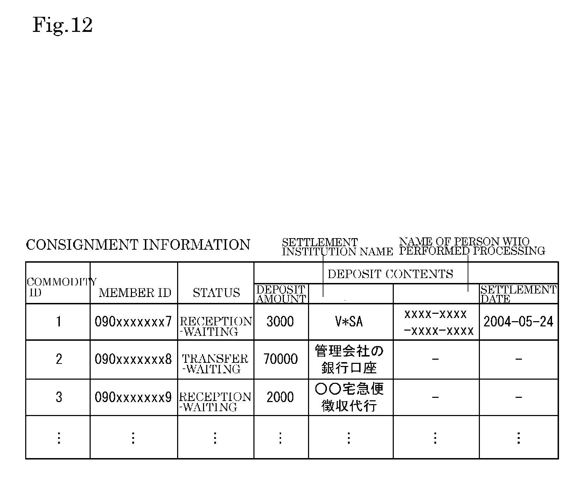

The consignment information in the procedure processing function 63 of the administration server 60, as shown in Fig. 12, is made up of the commodity ID of the commodity 19 whose consignment buying was requested to the purchaser, the member ID of the purchaser, a state whether the consignment buying is waiting for the transfer of the charge from the purchaser to the bank account of the administration company or waiting for the reception of the commodity 19 that was sent from the buyer to the purchaser, and deposit contents showing the information regarding the deposit of the charge.

The deposit contents constituting the consignment information in the procedure processing function 63 of the administration server 60 are made up of a deposit amount as a charge to be deposited when the consignment buying of the commodity 19 is requested, a settlement institution name (credit card company, for example) that the purchaser uses when depositing the charge to the bank account of the administration company, name of a person who performed a procedure (credit card number, for example) as information passed to the settlement institution name in depositing the charge, and settlement date when the charge was transferred to the bank account of administration company via the settlement institution.

Note that, in this example, the purchaser can select any one of a method of transferring via the credit card company, a method of directly transferring the charge to the bank account of the administration company, a method of paying via a cash on delivery service provided by the delivery institution, as a method of depositing the charge to the bank account of the administration company, and the administration server 60 is designed to perform a processing to allow the purchaser to deposit the charge depending on which method was selected.

The charge transfer function 64 of the administration server 60 has: an event timer activated based on predetermined conditions; a setting memory of the consignment information (refer to Fig. 12) including the member information (refer to Fig. 10) of the buyer and the purchaser and the deposit contents; a function that performs a processing of making deposit based on the deposit contents inputted by the purchaser; an examining function of the deposit contents based on the transfer status or the like to the bank account of the administration company; a composing function of an "instruction mail" showing that consignment buying is instructed based on the request of consignment buying by the purchaser; a reading function of a "reception confirmation mail" showing that the reception of the commodity 19 was confirmed; a collecting function of the administration fee (that is a commission and 3%, for example); a transfer function that transfers the charge of the consignment buying of the commodity 19 to the bank account of the buyer; a composing function of a "completion mail" showing that the charge was transferred and the consignment buying ended; and a setting and cancelling function of the reception-waiting state of the consignment information.

Note that the predetermined conditions of event timer in the charge transfer function 64 of the administration server 60 includes the passage of regular predetermined period, a case where new deposit contents occurred, a case where instruction was made from the accessory terminal (not shown), a case where a single purchaser purchased two types or more of commodities exceeding a predetermined total amount (a total amount should be 10,000 yen when the contracted unit price is about 2,000 yen, for example) (packaging), or the like. The profit rate of buyer tends to go down by the settlement of a small amount or a low-priced commodity, which is typical to an individual purchaser, but such an economical risk can be avoided.

The transaction monitoring function 65 of the administration server 60 has: a status confirming function that tracks each transaction stage by monitoring the mailing function 61; a penalty function that imposes a penalty to the cancelled contract of the consignment buying of the buyer; and a ranking function that ranks the contract performance of each buyer. The status confirming function publicizes each stage of the commodity registration, the consignment procedure, the settlement procedure, the reception of transfer, consignment and reception mails, and the sending of instruction and completion mails to the buyer telephone 10 or the like. Further, the penalty function, by the cancelling of contract of the consignment buying by the buyer, handles penalty when refund to the purchaser frequently occurs. For example, it is a case where a large number of orders are accepted despite of a commodity that is very popular and expected to be sold out instantaneously and a commodity with few stocks evidently. Accordingly, it is possible to urge the buyer to carefully observe the stock quantity and the sales of commodity at store counter and to be responsible for a remained quantity after the contract deadline

The ranking function of the transaction monitoring function 65 of the administration server 60 is a function to present the ranking information regarding the contract performance of the consignment buying of the buyer by reading all instruction mails sent from the administration server 60 to all buyers to aggregate the consignment information (refer to Fig.12) including deposit contents and by taking statistics of a predetermined period. By notifying the discount of administration fee and the supply of cash or points to the charge transfer function 64 according to an order on ranking, the material incentive can be given to the buyer. Further, by notifying the procedure processing function 63 of priority display, citation or the like, the quality incentive can be also given to the buyer. As described, by providing the material or quality incentive based on the ranking function, the purchaser can easily estimate the sophisticated selection of commodity and the credibility of the buyer, and competition among buyers is promoted to result in active dealing.

Specific ranking information is a total number or a total transfer amount, which is accumulated and within a predetermined period, or share in the total performance of all buyers in either one. Further, a specific using method of the ranking information is the display of the ranking outputted by the ranking function on the consignment form for inputting the commodity 19, for which the purchaser desires consignment buying and the deposit contents of the charge, in combination.

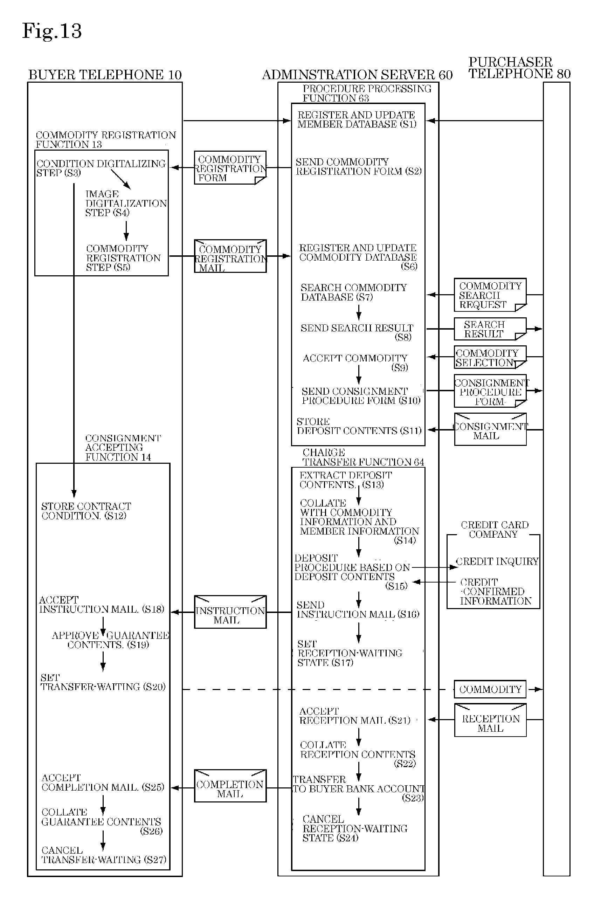

Next, the consignment buying method in Example 2 will be described based on the flowchart shown in Fig. 13.

First, the purchaser registers information to become the member from the purchaser telephone 80 with the member database 50 in advance (refer to Fig. 11) (step S1: from the purchaser telephone 80 to the administration server 60). Further, the member being the buyer registers information by which the member becomes the buyer from the buyer telephone 10 with the member database 50 in advance (refer to Fig. 11). Specifically, he/she registers that he/she is the buyer with the member classification of the member information (step S1: from the buyer telephone 10 to the administration server 60).

As described, when the purchaser and buyer register the member information, the buyer becomes capable of registering the commodity information that he/she can contract the consignment buying with the commodity database 40 (refer to Fig. 10) by using the commodity registration function 13 of the buyer telephone 10. Hereinafter, description will be made for the processing of the registration of commodity information containing the contract condition of the consignment buying of the commodity 19 by the buyer.

When the buyer finds a buyable commodity by using the buyer telephone 10, photographs it by the CCD camera, and activates the commodity registration function 13, access is made to the administration server 60 and the registration form is sent (step S2).

Subsequently, on the condition digitalizing step of the buyer telephone 10, the contract condition of the buyer is key-inputted from the input interface 12 to the registration form, and it is composed into the electronic mail of a predetermined format (step S3). Note that the contract condition includes contents regarding buying such as the purchasing place and the number of the buyable commodity and the contract period. Further, on the image digitalizing step, the photographed image of the commodity is attached from the camera interface 11 to the image information of the electronic mail (step S4). Then, on the commodity registration step, the electronic mail is sent to the administration server 60 as a "commodity registration mail" (step S5), and tne inputted contract condition is passed to the consignment accepting function 14 and stored (step S12).

Subsequently, the administration server 60 accepts the "commodity registration mail" sent from the buyer telephone 10 on step S5, and registers the commodity information with the commodity database 40 based on the contents of the "commodity registration mail" (refer to Fig. 10) (step S6, commodity registration step).

As described, when the buyer registers the commodity information that he/she can contract consignment buying with the commodity database 40 (refer to Fig. 10), the purchaser becomes capable of requesting the consignment buying by using the procedure processing function 63 of the administration server 60. Hereinafter, description will be made for the processing according to the request of the consignment buying of the commodity 19 made by the purchaser.

First, the administration server 60 receives a commodity search request based on a search keyword, which was sent from the purchaser telephone 80 by the operation of purchaser, and searches a commodity group corresponding to the search keyword from the commodity database 40 (refer to Fig. 10) (step S7). Then, a search result that consists of the commodity information and the image information 19a of each searched commodity 19 is sent (step S8), and the information is displayed on the purchaser telephone 80 (refer to Fig. 7). When the purchaser selects a commodity 19 that he/she desires, he/she accepts information by which the commodity 19 selected from the purchaser telephone 80 can be identified (step S9), and sends the consignment procedure form in which the contracted unit price and the contract deadline are set based on the commodity information of the selected commodity 19 (refer to Fig. 10) (step S10).

Meanwhile, in this example, the search result includes a link selection input section that is linked to a buyer page, which includes information regarding the buyer of each commodity, that is, evaluation of buyer (evaluation based on whether or not commodity was sent from the person who requests buying, evaluation based on the handling status of a bought commodity, taste evaluation based on the taste of the bought commodity, etc.), performance, nickname (buyer name), a main active region, age, picture, activity information (whether he/she performs buyer activity vigorously or not, whether he/she is an inactive buyer or not, etc.), for example. The purchaser, by the distribution of the linked buyer page to the purchaser telephone 80 based on his/her selection of the link selection input section corresponding to each commodity, confirms what kind of person the buyer is, the activity status at that point, or the like before making a buying consignment, and thus can execute a determination whether or not the buying consignment should be executed or not. Further, the evaluation and the performance in the buyer page are required display contents, but the nickname (buyer name), the main active region, age and picture may not necessarily been publicized, and whether they should be publicized/not publicized can be set by the buyer himself/herself.

Subsequently, the purchaser operates the purchaser telephone 80 to input consignment information, which contains a request of the consignment buying of commodity 19 and deposit contents used in the processing to allow the administration server 60 to deposit the contracted unit price of the commodity 19, to the consignment procedure form (refer to Fig. 12), and sends a "consignment mail" including the consignment information to the administration server 60. Then, the administration server 60, by accepting the "consignment mail" by the procedure processing function 63 and reading the consignment information containing the deposit contents of the consignment mail, it is stored in the setting memory by associating with the member information (refer to Fig. 11), and it is passed to the charge transfer function 64 (step S11, buying consignment accepting step).

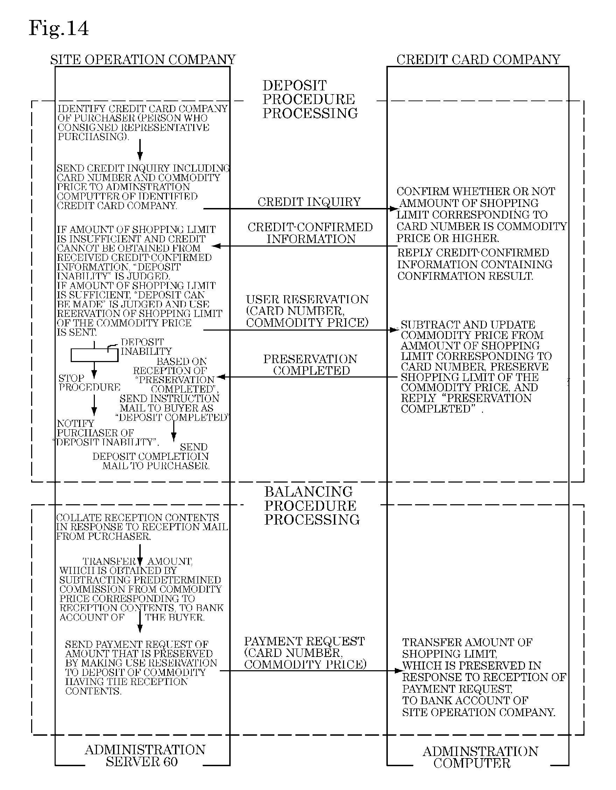

Specifically, in the case of executing a consignment procedure where advance payment (deposit) by a credit card is set to the commodity as the settlement classification, in the consignment procedure form, for example, description will be made for a flow where the deposit is executed by using Fig. 14. The consignment procedure form is provided with a card number input section of a credit card number (hereinafter, abbreviated as a card number), which is used for executing the settlement of the commodity price (charge), the administration server 60 identifies the credit card number of the purchaser based on the card number inputted to the card number input section. Meanwhile, in this Example 2, consignment procedure form accepts credit card numbers from purchasers each time, but the present invention is not limited to this. The credit card numbers are previously accepted from the members being the purchaser, they are stored in the member database 50 together with the bank account information of the members in a corresponding manner with the member IDs, the credit card number of a member is automatically identified from a member ID, which was used when the purchaser logged in the site, and thus the convenience of the member may be improved.

Then, the administration server 60 sends a credit inquiry including the card number and the commodity price to the management computer of a credit card company corresponding to the identified credit card number.

Based on the reception of the credit inquiry, the management computer of the credit card company confirms whether or not the amount of a shopping limit corresponding to the card number is a commodity price or more, and replies credit-confirmed information containing the confirmed result to the administration server 60.

Based on the reply, in the case where a confirmed result contained in the received credit-confirmed information is a confirmed result that the amount of the shopping limit is insufficient, the administration server 60 makes a judgment of deposit inability because credit cannot be obtained due to the insufficient amount. On the other hand, in the case where a confirmed result included in the received credit-confirmed information is a confirmed result that the amount of the shopping limit is sufficient, the server judges that deposit can be done, and sends a use reservation of the shopping limit for the commodity price to the management computer of the credit card company.

Meanwhile, the administration server 60, when it made the judgment of deposit inability, stops the processing of deposit procedure, and notifies the purchaser of the commodity that reservation cannot be made by a deposit inability mail, a deposit inability message screen, or the like.

Based on the reception of the use reservation, the management computer of the credit card company subtracts and updates the commodity price (charge) from the amount of the shopping limit corresponding to the card number to preserve (secure) the shopping limit of the commodity price and replies the completion of preservation to the administration server 60.

Then, based on the reception of the completion of preservation, the administration server 60 sends the instruction mail to the buyer of the commodity in a consignment processing (described later) on the assumption that the deposit procedure is completed.

As described, when the deposit procedure is completed and consignment information showing that the purchaser requests the consignment buying to the buyer and the deposit contents (refer to Fig. 12) are stored in the administration server 60, the consignment information is processed by the charge transfer function 64 of the administration server 60. Hereinafter, description will be made for a process until the buyer purchases the commodity 19.

The charge transfer function 64 of the administration server 60 extracts unprocessed consignment information (refer to Fig. 12) (step S13) when the event timer fulfilled predetermined conditions, collates it with corresponding commodity information (refer to Fig. 10), and also collates it with the bank account information of appropriate member information (refer to Fig. 11) (step S14). Then, in the case where the contracted unit price of the commodity 19, the settlement classification, the deposit contents or the like is matched, the function allows the purchaser to perform a processing of depositing a deposit amount based on the deposit contents contained in the consignment information (step S15, charge depositing step). After that, whether or not the charge of the commodity 19 was deposited from the purchaser is judged, and when deposit-done is confirmed, an "instruction mail" including guarantee contents that the administration company guarantees the payment of the commodity 19 is composed, it is sent to the buyer telephone 10 (step S16, buying-guaranteed electronic mail sending step), the consignment information is set to the reception-waiting state, and it is stored in the setting memory (step S17).

The consignment accepting function 14 of the buyer telephone 10 accepts the "instruction mail" to the buyer (step S18), reads guarantee contents that the administration company guarantees the payment of the charge of the commodity 19 based on the "instruction mail", and collates it with the contract condition stored in the commodity information on step S12 (refer to Fig. 10). Then, a collated result is displayed and the buyer confirms it. when the buyer approves the guarantee contents of the administration company from the buyer based on the key operation or the like (step S19), the guarantee contents are stored and set to the transfer-waiting state (step S20).

As described, when the buyer accepts the "instruction mail" from the administration server 60 showing that the consignment buying was requested and approves the guarantee contents of the administration company, the buyer buys the commodity 19 and sends it to the purchaser. Then, the purchaser who received the commodity 19 sends a "reception mail" showing that he/she received the commodity to the administration server 60, and the charge is transferred to the buyer by the charge transfer function 64 of the administration server 60. Hereinafter, description will be made for a process until the buyer gains the charge.

When the charge transfer function 64 of the administration server 60 accepts the "reception mail" of the commodity from the purchaser telephone 80 (step S21, reception-confirmed electronic mail receiving step), it reads the "reception mail" to collate the commodity information (refer to Fig. 10) and the consignment information (refer to Fig. 12) (step S22), transfers the contracted unit price to the bank account of the buyer based on the deposit contents of the member (step S23, deposit money balancing step), and sends the "completion mail" of the transfer procedure to the buyer telephone 10. Then, it cancels the reception-waiting state of the consignment information (refer to Fig. 12) (step S24) and the charge transfer function 64 of the administration server 60 ends the processing.

When the consignment accepting function 14 of the buyer telephone 10 accepts the "completion mail" from the administration server 60 (step S25), it reads the completion mail and collates it with the guarantee contents stored in the administration company on step S19 (step S26), and the transfer-waiting state is cancelled based on the collated result (step S27).

Fig. 7 is the schematic view of a display example of the commodity information on the display screen 81 of the purchaser telephone 80 or the like (refer to Fig. 10).

On the display screen 81, a control bar 91 for identifying a commodity, selecting deposit contents, screen operation or the like is arranged on the uppermost step in the display frame 90 of each commodity together with a caption urging the purchaser for consignment buying, the publicized personal data such as the face picture 92a, the contract performance 92b and the ranking 92c of the buyer is displayed on the lower left column thereof, and the publicized commodity information such as the search keyword 93a, the commodity name 93b, the contracted unit price 93c, contract deadline 93d, the buyable quantity 93e and the detailed explanation 93f and the image information 94 of the commodity are displayed on the lower right column thereof.

Further, in the processing (balancing procedure processing) where the charge is transferred to the buyer, description will be made for a processing between the administration server 60 and the management computer of the credit card company based on Fig. 14. The administration server 60 reads the reception mail from the purchaser as described above, and collate reception contents in response to the reception of the reception mail. Then, it transfers an amount, which is obtained by subtracting a predetermined commission (3% in this example) from the commodity price of a commodity corresponding to reception contents, to the bank account of the buyer identified from the member database 50.

Then, by making use reservation to the deposit of the commodity having the reception contents in the deposit procedure processing, a payment request of the amount preserved in the credit card company, which is a payment request including the card number and the commodity price (charge) specifically, is sent to the credit card company, the management computer of the credit card company transfers the amount of shopping limit, which was preserved in the credit card of the card number received in response to the reception of the payment request, to the bank account of the site operation company, and thus the amount transferred to the bank account of the buyer is compensated and the commission becomes the profit of the site operation company.

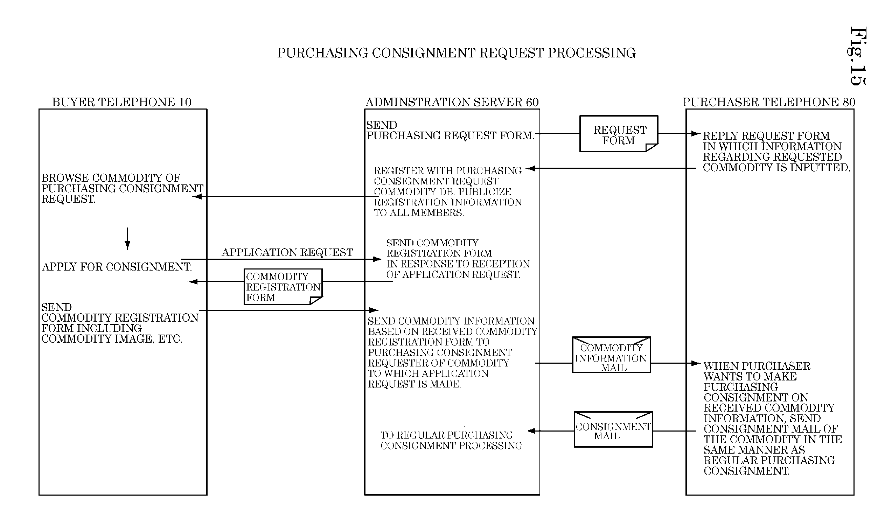

Further, this Example 2 is provided with a function that not only enables the member being the buyer to register the information of purchasable commodity with the administration server 60 but also enables the member being the purchaser to request a commodity for which he/she wishes purchasing consignment, and description will be made for the function of the purchasing consignment request based on Fig. 15.

First, in the case where the purchaser wants to request the commodity for which he/she wishes purchasing consignment, he/she selects an item menu (not shown) of the purchasing consignment request in the administration server 60 to obtain the purchasing request form the administration server 60.

Then, information regarding the commodity for which purchasing is requested, which is a commodity name, a manufacturer, a product number, commodity explanation, a picture and quantity, wished purchasing price or the like, is inputted to the obtained purchasing request form, and the inputted purchasing request form is sent to the administration server 60. Meanwhile, in this occasion, the history of past buying consignment is stored in a predetermined period by each member in the administration server 60, the purchasing request form is allowed to display the list of buyers who executed buying consignment in the past, and a buyer to whom the purchasing request is wished may be specified from the buyers who executed buying consignment in the past.

The administration server 60, based on the received purchasing request form, registers each information regarding the commodity for which purchasing is requested, which is contained in the purchasing request form, with a purchasing consignment requested commodities DB (not shown), and the registered each information regarding the commodity for which purchasing was requested is publicized to the member.

The member, in the case where he/she becomes the buyer, before registering the commodity that he/she is going to purchase, he/she can confirm whether or not there is any member who requests the purchasing of the commodity by searching/browsing the commodities registered with the purchasing consignment requested commodities DB, and when the commodity that he/she is going to purchase exists in the commodities registered with the purchasing consignment requested commodities DB, he/she applies for the consignment of the commodity.

The administration server 60, in response to the reception of an application request that is sent from the buyer telephone 10 based on the application operation (specifically, a selecting and inputting operation of the application button of the browser), sends a commodity registration form same as the commodity registration from the buyer telephone 10 to the buyer telephone 10, a commodity registration form to which each type of information such as the commodity image, which was digitalized and inputted to the buyer telephone 10 in the same manner as the previous case, is sent to the administration server 60

The administration server 60, based on the reception of the commodity registration form corresponding to the application request, sends commodity information (electronic mail) based on the received commodity registration form to the purchaser telephone 80 of a purchasing consignment requester (purchaser) of the commodity for which application request was made.

When the purchasing consignment requester (purchaser), who received the commodity information (electronic mail) wants to perform purchasing consignment on the received commodity information, he/she replies the purchasing consignment mail of the commodity information (electronic mail), or accesses the commodity page of the commodity information (electronic mail) to select and input the selecting-inputting section of a "purchasing consignment" (not shown) provided for the commodity page, each type of processing such as the processing of deposit procedure is executed in the same manner as the above-described regular consignment purchasing, the consignment purchasing of the commodity is executed by the buyer, and the commodity is delivered to the purchasing consignment requester (purchaser).

In the foregoing, Example 2 of the present invention has been described by the drawings. However, the specific constitution is not limited to the examples, and modifications and additions in the region without departing from the gist of the present invention are included in the present invention.

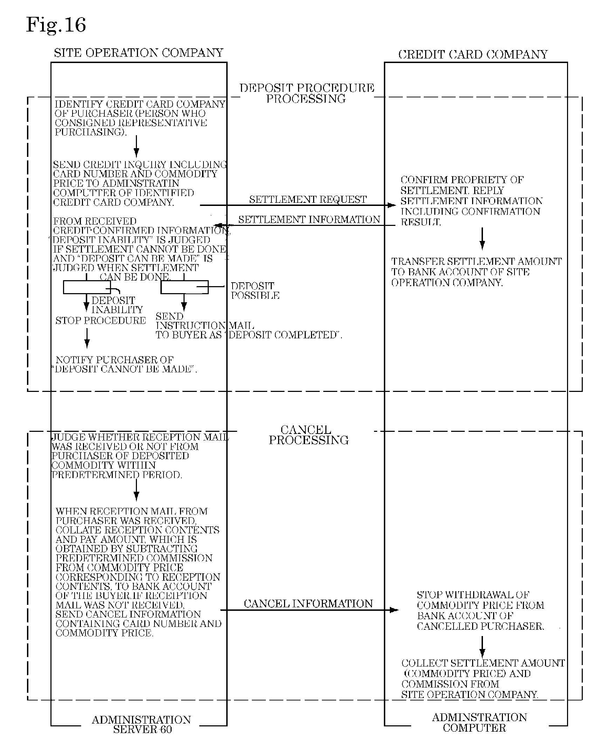

For example, in the examples, as shown in Fig. 14, inquiry of credit is executed to the credit card company in the deposit procedure processing, the use reservation is sent after the confirmation of credit, and preservation of the shopping limit (use limit) is obtained. However, the present invention is not limited to this. By further reducing the communicating frequency between the administration server 60 and the management computer of the credit card company and by executing payment to the bank account of the site operation company quickly, reducing or totally eliminating time difference with the payment to the buyer is set as an object. As shown in Fig. 16, settlement request of the commodity price (charge) is sent to the credit card company in the deposit procedure to execute settlement with the credit card company, the instruction mail as completed deposit is sent to the buyer if the settlement can be done, and commodity whose settlement was executed is delivered to the purchaser within a predetermined period. In the case where the purchaser did not receive the reception mail, a cancel processing, in which cancel information including the card number and the commodity price (charge) is sent to the credit card company, may be executed in order to prevent withdrawal from the bank account of the settled commodity price (charge). Note that such a case is hard to occur circumstantially because time when withdrawal from the bank account is executed is one month or two months later in a monthly unit, but if the settled commodity price (charge) was already withdrawn from the bank account of the purchaser for some reason, a processing of transferring the commodity price (charge) from the credit card company to the bank account of the purchaser may be executed based on the reception of the cancel information.

Further, in the examples, description was made for the mode where all of the commodity registration from the buyer and each information or notification of the consignment of representative buying from the purchaser, the instruction to the buyer, the reception from the purchaser, the completion of bank account transfer or the like were executed on the electronic mail. However, the present invention is not limited to this, and they may be confirmed (notified) by displaying on a page of a site or may be notified by inputting on the page of the site, or alternatively, confirmation (notification) by mail and the page on the site may be combined, and their mode may be appropriately selected depending on the time where the confirmation (notification) occurs or their types.

Further, in the consignment buying system of the examples, the example where the buyer telephone 10 being the camera-equipped cell phone that the buyer can carry was used as the buyer terminal that the buyer uses to execute commodity registration. However, the present invention is not limited to this, and, as the buyer terminal, a regular personal computer or a laptop personal computer may be used as the buyer terminal. In this case, image capture means for photographing the commodity may be a digital camera, a web camera or the like, which is separate from the personal computer or the laptop personal computer.

Further, in the consignment buying system of the examples, the example was shown where the purchaser telephone 80 being a cell phone that the purchaser can carry was used as a terminal that the purchaser uses, and this is preferable because the purchaser can browse a commodity wherever he/she is and can execute the buying consignment. However, the present invention is not limited to this, and it goes without saying that a regular personal computer or laptop personal computer may be used as the terminal that the purchaser uses.

Further, in the consignment buying system of the examples, the mode where the shop information is contained in the registered information is exemplified. However, the present invention is not limited to this, and the shop information may not be registered always in the case where the buyer does not want to present the shop information or the like, and the buyer may be allowed to appropriately select register/non-register of the shop information.

Furthermore, in the consignment buying system of the examples, a new buying consignment from the member is not accepted when an accepting deadline of the buying consignment is expired. However, the present invention is not limited to this, and whether or not re-acceptance of buying consignment is executed, the number of re-acceptance, or the like is previously set by accepting from the buyer if no application of the buying consignment is made, so that in the case where executing of the re-acceptance of buying consignment is set when the accepting deadline of the buying consignment is expired, the re-acceptance of buying consignment may be automatically executed, and the fact that the accepting deadline of buying consignment was expired and the re-acceptance of the buying consignment was started may be notified to the buyer.

Further, in the consignment buying system of the examples, when the purchaser requests a commodity for which he/she wishes purchasing consignment, genre where each buyer is good at purchasing is previously registered with the buyer information in the case of searching a buyer other than the buyers who made purchasing consignment with him/her in the past in order to specify a buyer, a list of buyers who register with a genre same as the specified genre, which the buyer is good at, is displayed in a list by an evaluation order, a region or the like, for example, when the purchaser specifies the genre, and thus a function capable of simply specifying a buyer other than the buyers who made purchasing consignment with him/her in the past may be equipped.

Further, in searching or the like of the buyer, when a buyer that he/she likes is found, such a buyer is registered as "my buyer" being the buyer with who the purchasing consignment is not executed and he/she would like to make purchasing consignment in future, and in the case where the purchaser request a commodity for which he/she wishes purchasing consignment, the "my buyers" may be displayed in a list together with the buyers with who the purchasing consignment was made in the past to make them selectable and specifiable.

Further, in the examples, the whole amount of the commodity price (charge) is deposited in the deposit procedure processing. However, the present invention is not limited to this, and the deposit amount to be deposited may by only a part of the commodity price (charge), which is a half amount, for example, and the remaining half amount may be collected at the time of or after the arrival of the commodity.

Further, in the examples, the consignment buying system is installed on the Internet 30. However, the present invention is not limited to this, and it may be installed on another electric communication line such as the extranet and the intranet, for example.

Further, in the examples, the buyer telephone network 20 and the purchaser telephone network 70 are separate. However this example is not limited to this, and the telephone networks may be the same.

Further, in the examples, the administration server 60, the commodity database 40 and the member database 50 are installed on the Internet 30. However, the present invention is not limited to this, and the administration server 60, the commodity database 40 and the member database 50 may be installed either on the buyer telephone network 20 or the purchaser telephone network 70.

Further, in the examples, the purchaser telephone 80 on the purchaser telephone network 70 is applied as the member terminal. However this example is not limited to this, and a personal computer (not shown) provided on the Internet 30 may be provided as well.

Furthermore, in the examples, the buyer telephone 10 and purchaser telephone 80 make a constitution where registration, search or the like of information is performed to the commodity database 40 and the member database 50 via the administration server 60. However, this example is not limited to this, and a constitution may be formed where a registration and update function of information stored in the commodity database 40 and the member database 50, and a transmission/reception function of information with the buyer telephone 10 and the purchaser telephone 80 is provided, and access is directly made from the buyer telephone 10 and the purchaser telephone 80 to the commodity database 40 and the member database 50 without the administration server 60 in-between, and registration, search or the like of information is performed.

Furthermore, the examples form the constitution where the administration server 60, the commodity database 40 and the member database 50 are connected via the Internet 30. However, this example is not limited to this, and a constitution may be formed where a storage device (not shown) is provided for the administration server 60, the commodity database 40 and the member database 50 are installed inside the administration server 60.

Still further, in the examples, since the buyer does not need to contract a consignment buying beyond the contract deadline, the purchaser is not allowed to proceed the consignment buying on and after the contract deadline. However, the present invention is not limited to this, and by accepting a consignment buying beyond the contract deadline from the purchaser and presenting it to the buyer as an arbitrary consignment buying case, the buyer may be allowed to determine approval depending on a cost for visiting the buying source, a total contract amount, contribution to the contract performance, or the like.

Further, in the case of using points as a deposit method, transfer of the commodity charge to the member being the buyer may be executed by using the points and the member being the buyer may execute the buying request of the commodity by using the points obtained in this manner. In this case, it is desirable that the points be cashed.

## Claims

1. A buyer terminal that is used for a consignment buying system where a registrant, who is registered with a hosting service as a buyer, performs the buying of a commodity done by a member registered with the hosting service that is provided by a server computer on an electric communication line on behalf of the member, and carried by the registrant, in which the terminal is **characterized in that** it has:
image capture means for photographing a commodity that a registrant, who is registered as a buyer, can buy;
image digitalizing means for digitalizing the image information regarding the buyable commodity whose image was captured by the image capture means, based on a setting format;
input means for inputting a contract condition for commodity buying contract;
condition digitalizing means for digitalizing the contract information regarding the contract condition, which was inputted from the input means, based on a setting format;
commodity registration means for sending buying commodity information containing at least image information that was digitalized in the image digitalizing means, contract information that was digitalized in the condition digitalizing means, and buyer information regarding the registrant who was registered as the buyer to a server computer, which provides the hosting service, through the electric communication line, and for registering the information with a commodity database of the server computer; and
mail receiving means for receiving a buying-guaranteed electronic mail that an operator of the hosting service guarantees the buying consignment of the commodity, which is sent from the server computer, based on the acceptance of buying contract from each member executed in the hosting service based on the registration of the buying commodity information of the commodity database.

2. The buyer terminal according to Claim 1, which is **characterized in that** the image capture means has a camera for photographing a buyable commodity.

3. The buyer terminal according to Claim 1 or 2, which is **characterized in that** the contract condition inputted from the input means includes a buyable contract deadline until when buying can be performed.

4. The buyer terminal according to any one of Claims 1 to 3, which is **characterized in that** the commodity registration means sends the buying commodity information to the server computer through the electric communication line including a mobile communication line.

5. The buyer terminal according to any one of Claims 1 to 4, which is **characterized in that** the buying-guaranteed electronic mail includes that commodity charge was deposited to the hosting service according to a buying condition.

6. A buying representative method in the buyer terminal, which is used by a registrant, who was registered with the hosting service as a buyer, performs the buying of a commodity done by a member registered with the hosting service that is provided by the server computer on the electric communication line on behalf of the member, in which the method is **characterized in that** it includes:
an image digitalizing step of digitalizing the image information regarding a buyable commodity by photographing the commodity by the buyer, based on a setting format;
a contract condition accepting step for accepting a contract condition for commodity buying contract;
a condition digitalizing step for digitalizing the contract information regarding the contract condition, which was accepted on the contract condition accepting step, based on a setting format;
a commodity registration step of sending buying commodity information containing at least image information that was digitalized in the image digitalizing step, contract information that was digitalized in the condition digitalizing step, and buyer information regarding the registrant who was registered as the buyer to the server computer, which provides the hosting service, through the electric communication line, and for registering with the commodity database of the server computer; and
a mail receiving step for receiving a buying-guaranteed electronic mail that the operator of the hosting service guarantees the buying consignment of the commodity, which is sent from the server computer, based on the acceptance of buying contract from each member executed in the hosting service based on the registration of the buying commodity information of the commodity database.

7. The buying representative method in the buyer terminal according to Claim 6, which is **characterized in that**
the image digitalizing step digitalizes image information captured by a camera for photographing the buyable commodity.

8. The buying representative method in the buyer terminal according to Claim 6 or Claim 7, which is **characterized in that**
the contract condition accepted on the accepting step includes the contract deadline until when buying can be performed.

9. The buying representative method in the buyer terminal according to any one of Claims 6 to Claim 8, which is **characterized in that**
the commodity registration step sends the buying commodity information to the server computer through the electric communication line including the mobile communication line.

10. The buying representative method according to any one of Claim 6 to Claim 9, which is **characterized in that**
the buying-guaranteed electronic mail received on the mail-receiving step includes that commodity charge was deposited to the hosting service according to a buying condition.

11. A consignment buying system where a registrant, who registered with the hosting service as a buyer, performs the buying of a commodity done by a member registered with the hosting service that is provided by the server computer on the electric communication line on behalf of the member, in which the system is **characterized in that** it has:
a buyer terminal that is provided with a communication function to the server computer, having:
image capture means for photographing a commodity that the registrant, who is registered as a buyer, can buy;
image digitalizing means for digitalizing the image information regarding the buyable commodity whose image was captured by the image capture means, based on a setting format;
input means for inputting a contract condition for commodity buying contract;
condition digitalizing means for digitalizing the contract information regarding the contract condition, which was inputted from the input means, based on a setting format;
commodity registration means for sending buying commodity information containing at least image information that was digitalized in the image digitalizing means, contract information that was digitalized in the condition digitalizing means, and buyer information regarding the registrant who was registered as the buyer to the server computer, which provides the hosting service, through the electric communication line, and for registering the information with the commodity database of the server computer; and
mail receiving means for receiving the buying-guaranteed electronic mail that the operator of the hosting service guarantees the buying consignment of the commodity, which is sent from the server computer, based on the acceptance of buying contract from each member executed in the hosting service based on the registration of the buying commodity information of the commodity database; and
a server computer that provides the hosting service, in which
the server computer has:
a commodity database for registering the buying commodity information;
buying contract accepting means for distributing commodity information containing at least the image information and contract information of a commodity, which are contained in each buying commodity information registered with the commodity database, to the terminal of each member who applied member registration to the hosting service through the electric communication line, and for accepting buying contract of each commodity ;
charge depositing means for performing a processing of depositing at least a part of the charge of commodity, for which the buying contract accepting means accepted buying contract, to a member who executed the buying contract;
buying guarantee electronic mail sending means for sending an electronic mail that the operator of the hosting service guarantees the buying consignment of the commodity, to a registrant who is identified by the buyer information contained in the buying commodity information of the commodity, which is registered with the commodity database, based on deposit-done confirmation of commodity charge in the charge depositing means;
reception-confirmed electronic mail receiving means for receiving a reception-confirmed electronic mail that the reception of the commodity, for which the buying contract was accepted, was confirmed from the member who executed the buying contract; and
deposit money balancing means for executing a processing of transferring deposit money, which was deposited by the member by the charge depositing means, to the bank account of the registrant who became the buyer of the commodity that was delivered to the member, based on the reception of the reception-confirmed electronic mail by the reception-confirmed electronic mail receiving means.

12. The consignment buying system according to Claim 11, which is **characterized in that** the charge depositing means includes:
credit inquiry processing means for performing a processing of inquiring a financial institution whether or not the member who executed the buying contract owns the credit of a deposit amount being at least a part of the charge of the commodity for which the buying contract was accepted;
deposit propriety judging means for judging the propriety of deposit based on credit-confirmed information that is replied from the financial institution based on the credit inquiry in the credit inquiry processing means; and
use reservation sending process means for sending use reservation for requesting the preservation of the deposit amount, which was inquired by the credit inquiry processing means, to the financial institution based on the fact that the judgment result of deposit propriety in the deposit propriety judging means is depositable.

13. The consignment buying system according to Claim 11, which is **characterized in that**
the charge depositing means includes:
settlement request sending processing means for performing a processing of sending a settlement request of the charge of the commodity, whose buying contract was accepted, to the financial institution; and
deposit propriety judging means for judging the propriety of deposit based on the settlement information containing the information of settlement propriety that is replied from the financial institution based on the reception of a settlement request in the settlement request sending processing means, and
the deposit money balancing means includes cancel processing means that executes a processing of returning the charge of the commodity being the deposit money, which was deposited by the member in the charge depositing means, to the bank account of the member who performed the buying contract, based on the fact that reception-confirmed electronic mail receiving means did not receive the reception-confirmed electronic mail within a predetermined period.

14. The consignment buying system according to Claim 12 or 13, which is **characterized in that** it has:
notifying means for notifying the member who performed buying contract that deposit cannot be made when the deposit propriety judging means judges that the deposit cannot be made.

15. The consignment buying system according to Claim 11, which is **characterized in that**
the charge depositing means performs a processing of transferring at least a part of the charge of the commodity, for which buying contract was accepted, to the bank account under the name of hosting service.

16. The consignment buying system according to any one of Claim 11 to Claim 15, which is **characterized in that**
the server computer has:
purchasing consignment wished commodity accepting means for accepting information regarding a commodity that each member, who applied member registration to the hosting service, wishes to make purchasing consignment from his/her terminal;
purchasing consignment wished commodity database for storing the information regarding a commodity that the member wishes to make purchasing consignment, which the purchasing consignment wished commodity accepting means accepted; and
application accepting means for distributing information regarding a commodity that the member wishes to make purchasing consignment, which is stored in the purchasing consignment wished commodity database, to a buyer terminal that the registrant, who was registered as a buyer, carries and accepting the application for the purchasing consignment of the commodity, and
the buying contract accepting means, based on the application in the application accepting means, sends information regarding a commodity to be bought, which is sent from the buyer terminal of the registrant who made application, to the member who wishes to make purchasing consignment to the applied commodity, and accepts the buying contract of the commodity to be bought.

17. The consignment buying system according to any one of Claim 11 to Claim 16, which is **characterized in that**
the commodity registration means sends the buying commodity information to the server computer through the electric communication line including the mobile communication line.

18. The consignment buying system according to any one of Claim 11 to Claim 17, which is **characterized in that**
the charge depositing means enables the registrant who is registered as the buyer to perform deposit within a contract deadline that is set for each commodity.

19. The consignment buying system according to any one of Claim 11 to Claim 18, which is **characterized in that**
the server computer includes ranking means for ranking the registrant, who was registered as the buyer, regarding buying consignment performance, and
the charge depositing means executes a processing of presenting the ranking information of the buyer, which was ranked in the ranking means, for the member.

20. The consignment buying method, which is used by the registrant, who registered with the hosting service as a buyer, performs the buying of a commodity done by a member registered with the hosting service that is provided by the server computer on the electric communication line on behalf of the member, in which the method is **characterized in that** it includes:
a commodity registration step of receiving buying commodity information including at least image information that the image of buyable commodity by the registrant is digitalized based on the setting format, contract information that a contract condition for the buying contract of commodity is digitalized based on the setting format, and buyer information regarding the registrant registered as the buyer, from the buyer terminal that each registrant, who was registered as the buyer, carries through the electric communication line, and registrating the information to the commodity database;
a buying contract accepting step of distributing commodity information containing at least the image information and the contract information of the commodity, which are contained in the buying commodity information that is registered with the commodity database on the commodity registration step, to the terminal of the member, who applied member registration to the hosting service, via the electric communication line and accepting the buying contract of each commodity;
a charge depositing step of performing a processing of depositing at least a part of the charge of the commodity, for which the buying contract was accepted on the buying contract accepting step, to the member who executed the buying contract;
a buying-guaranteed electronic mail sending step of sending an electronic mail that the operator of the hosting service guarantees the buying consignment of commodity to a registrant identified by the buyer information contained in the buying commodity information, which is registered with the commodity database, based on a deposit-done confirmation of commodity charge on the charge depositing step;
a reception-confirmed electronic mail receiving step of receiving a reception-confirmed electronic mail that the reception of the commodity whose buying contract was accepted from the member who executed the buying contract; and
a deposit money balancing step of executing a processing of transferring deposit money, which was deposited by the member on the charge depositing step, to the bank account of the registrant who became the buyer of the commodity delivered to the member based on the fact that the reception-confirmed electronic mail was received on the reception-confirmed electronic mail receiving step.

21. The consignment buying method according to Claim 20, which is **characterized in that**
the charge depositing step includes:
a credit inquiry processing step of performing a processing of inquiring the financial institution whether or not the member who executed the buying contract owns the credit of the deposit amount being at least a part of the charge of the commodity for which the buying contract was accepted;
a deposit propriety judging step of judging propriety of deposit based on the credit-confirmed information that is replied from the financial institution based on the credit inquiry in the credit inquiry processing step; and
a use reservation sending process step of sending use reservation for requesting the preservation of the deposit amount, which was inquired on the credit inquiry processing step based on the fact that the judgment result of deposit propriety on the deposit propriety judging step is depositable, to the financial institution.

22. The consignment buying method according to Claim 20, which is **characterized in that**
the charge depositing step includes:
a settlement request sending processing step of performing a processing of sending a settlement request of the charge of the commodity, for which the buying contract was accepted, to the financial institution; and
a deposit propriety judging step of judging propriety of deposit based on the settlement information that includes the information of the propriety of settlement replied from the financial institution based on the reception of the settlement request in the settlement request sending process step, and
the deposit money balancing step includes a cancel processing step of executing a processing of returning the charge of the commodity, which is the deposit money deposited by the member in the charge depositing step, to the bank account of the member who performed the buying contract, based on the fact that reception-confirmed electronic mail was not received within a predetermined period on the reception-confirmed electronic mail receiving step.

23. The consignment buying method according to Claim 21 or 22, which is **characterized in that** it includes:
a notifying step of notifying the member who performed the buying contract of the fact that deposit could not be made when the deposit propriety judging step judged that the deposit could not be done.

24. The consignment buying method according to Claim 20, which is **characterized in that**
the charge depositing step performs a processing of transferring at least a part of the charge of the commodity, for which the buying contract was accepted, to the bank account under the name of the hosting service.

25. The consignment buying method according to any of Claim 20 to Claim 24, which is **characterized in that** it includes:
a purchasing consignment wished commodity accepting step of accepting information regarding the commodity for which each member, who applied member registration to the hosting service, wishes to make purchasing consignment from him/her;
a purchasing consignment wished commodity information storing step of storing the information regarding the commodity, for which the member wishes to make purchasing consignment that the purchasing consignment wished commodity accepting step accepted, in a purchasing consignment wish commodity database; and
an application accepting step of distributing information regarding the commodity stored in the purchasing consignment wished commodity database in the purchasing consignment wished commodity information storing step, for which he/she wishes to make purchasing consignment, to the buyer terminal that the registrant registered as the buyer carries and accepting an application to the purchasing consignment of the commodity, and
the buying contract accepting step sends the information regarding a commodity to be bought, which is sent from the buyer terminal of the applied registrant, to the member who wishes to make the purchasing consignment of the applied commodity, and accepts the buying contract of the commodity to be bought, based on the application on the application accepting step.

26. The consignment buying method according to any of Claim 20 to Claim 25, which is **characterized in that**
the commodity registration step receives the buying commodity information from the buyer terminal through the electric communication line including the mobile communication line.

27. The consignment buying method according to any of Claim 20 to Claim 26, which is **characterized in that**
the charge depositing step enables the registrant who was registered as the buyer to perform deposit within a contract deadline that is set for each commodity.

28. The consignment buying method according to any of Claim 20 to Claim 27, which is **characterized in that** it includes:
a ranking step of ranking the registrant registered as the buyer regarding the buying consignment performance, and
the charge depositing step executes a processing of presenting the ranking information of the buyer, who was ranked on the ranking step, for the member.

29. A program to allow a computer to execute the method according to any one of Claim 6 to Claim 10 and Claim 20 to Claim 28.

30. A computer readable recording medium, which is **characterized in that** the program, which allows the computer to execute the method according to any one of Claim 6 to Claim 10 and Claim 20 to Claim 28, is recorded therein.
